# EUROPEAN PATENT SPECIFICATION

(11) **EP 3 915 219 B1**
(45) Date of publication and mention of the grant of the patent: **06.08.2025**
(21) Application number: 20756316.4
(22) Date of filing: 14.02.2020
(51) Int. Cl.: H04L 5/00, H04L 1/00, H04B 7/06, H04W 72/00

(54) **ELECTRONIC DEVICES AND METHODS FOR SECONDARY CELL ACTIVATION**
ELEKTRONISCHE VORRICHTUNGEN UND VERFAHREN ZUR AKTIVIERUNG VON SEKUNDÄRZELLEN
DISPOSITIFS ÉLECTRONIQUES ET PROCÉDÉS DESTINÉS À UNE ACTIVATION D'UNE CELLULE SECONDAIRE

(30) Priority: 15.02.2019 WO PCT/CN2019/075231
(43) Date of publication of application: 01.12.2021
(73) Proprietor: MediaTek Singapore Pte Ltd, Singapore 138628 (SG)
(72) Inventor: TANG, Zhixun, Beijing 100015 (CN); YU, Tsang-Wei, Hsinchu City 30078 Taiwan (TW); LIN, Hsuan-Li, Hsinchu City 30078 Taiwan (TW)
(74) Representative: Patentship Patentanwaltsgesellschaft mbH
(86) International application number: PCT/CN2020/075336
(87) International publication number: WO 2020/164610

(56) References cited:
- WO-A1-2019/029330
- WO-A1-2019/029330
- CN-A- 102 780 998
- CN-A- 102 905 387
- US-A1- 2018 302 848
- MEDIATEK INC: "Remaining issues for UE measurement capability", vol. RAN WG4, no. Gothenburg, Sweden; 20180820 - 20180824, 10 August 2018 (2018-08-10), XP051579039, Retrieved from the Internet <URL:http://www.3gpp.org/ftp/tsg%5Fran/WG4%5FRadio/TSGR4%5F88/Docs/R4%2D1810016%2Ezip> [retrieved on 20180810]
- QUALCOMM INCORPORATED: "Enhancements on Multi-beam Operation", vol. RAN WG1, no. Taipei, Taiwan; 20190121 - 20190125, 20 January 2019 (2019-01-20), XP051593752, Retrieved from the Internet <URL:http://www.3gpp.org/ftp/Meetings%5F3GPP%5FSYNC/RAN1/Docs/R1%2D1900906%2Ezip> [retrieved on 20190120]
- FRAUNHOFER IIS ET AL.: "3GPP TSG RAN WG1 Meeting #95, R1-1813583", NR BEAM MANAGEMENT SUPPORTING MULTI-GNB MEASUREMENTS FOR POSITIONING, 16 November 2018 (2018-11-16), XP051555639, DOI: 20200507103844X
- FRAUNHOFER IIS ET AL.: "3GPP TSG RAN WG1 Meeting #95, R1-1813583", NR BEAM MANAGEMENT SUPPORTING MULTI-GNB MEASUREMENTS FOR POSITIONING, 16 November 2018 (2018-11-16), XP051555639, DOI: 20200507213436Y

## Description

### TECHNICAL FIELD

The present application relates generally to wireless communication technology including cell activation.

### BACKGROUND

The background description provided herein is for the purpose of generally presenting the context of the disclosure. Work of the presently named inventors, to the extent the work is described in this background section, as well as aspects of the description that may not otherwise qualify as prior art at the time of filing, are neither expressly nor impliedly admitted as prior art against the present disclosure.

Carrier aggregation can be used in 5th Generation (5G) wireless communication systems to increase system capacity. For example, a plurality of cells including a primary cell and secondary cells can be configured for an electronic device. The secondary cells can be activated to increase a data rate for the electronic device and deactivated to save power consumption for the electronic device.

Issues regarding UE measurement capability are discussed in "Remaining issues for UE measurement capability", MediaTek Inc., 3GPP TSG-RAN WG4 Meeting #88, Sweden, August 20-24, 2018. Enhancements for New Radio Multiple-Input Multiple-Output (MIMO) technology are disclosed in "Enhancements on Multi-beam Operation", Qualcomm Incorporated, 3GPP TSG-RAN WG1 Ad-Hoc Meeting 1901, Taiwan, January 21-25, 2019.

### SUMMARY

The object of the invention is achieved by the subject-matter of the independent claims. The dependent claims describe advantageous embodiments. The scope of protection of the invention is limited by the appended claims.

### BRIEF DESCRIPTION OF THE DRAWINGS

Various embodiments of this disclosure that are proposed as examples will be described in detail with reference to the following figures, wherein like numerals reference like elements, and wherein:
Fig. 1A shows a block diagram of an exemplary communication system 100 according to an embodiment of the disclosure;
Fig. 1B shows cell groups 170 and 180 in the communication system 100 according to an embodiment of the disclosure;
Fig. 1C shows examples of reception beams according to embodiments of the disclosure;
Fig. 2A shows a flowchart of an exemplary process 200A according to an embodiment of the disclosure;
Fig. 2B shows a flowchart of an exemplary process 200B according to an embodiment of the disclosure;
Fig. 3 shows an exemplary process 300 according to embodiments of the disclosure;
Fig. 4 shows an exemplary process 400 according to embodiments of the disclosure;
Fig. 5 shows an exemplary process 500 according to embodiments of the disclosure; and
Fig. 6 shows an exemplary block diagram of an electronic device 600 according to an embodiment of the disclosure.

### DETAILED DESCRIPTION OF EMBODIMENTS

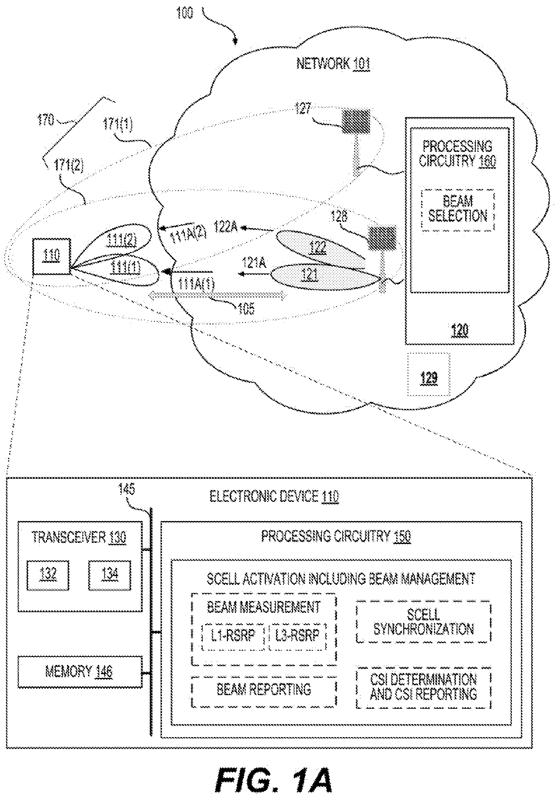

Fig. 1A shows a block diagram of an exemplary communication system 100 according to an embodiment of the disclosure. The communication system 100 includes a network 101 and an electronic device 110 that receives wireless communication service from the network 101. Carrier aggregation (CA) of carriers or cells (e.g., cells 171(1)-171(2)) in a cell group 170 can be configured by the network 101 (e.g., the base station 120) to serve the electronic device 110. Further, a high frequency (HF) carrier (e.g., in a frequency range 2 (FR2)) can be used in the cell 171(2) to increase a data rate. The base station 120 and the electronic device 110 can perform beamformed transmission and/or reception to accommodate the HF carrier in the cell 171(2). Accordingly, in downlink (DL) communication from the network 101 to the electronic device 110, signal energy of a beam (or transmission (Tx) beam, DL Tx beam) 121 can be focused (or transmitted) predominantly toward a specific direction, such as a direction 121A (also referred to as Tx direction or DL Tx direction) associated with the DL Tx beam 121, and signal energy can be received predominantly from a specific direction such as a direction 111A(1) (also referred to as reception (Rx) direction or a DL Rx direction) associated with a beam (or Rx beam, DL Rx beam) 111(1) of the electronic device 110. A beam pair (or DL beam pair) 105 for the DL communication can include the Tx beam 121 and the Rx beam 111(1).

In an embodiment, the cell 171(2) is a secondary cell (SCell) configured for the electronic device 110 and uses beamformed transmission and/or reception. The SCell 171(2) can be a cell to be activated first in the FR2. The SCell 171(2) can be a cell to be activated first in a frequency band in the FR2. According to aspects of the disclosure, the SCell 171(2) can be activated using a SCell activation procedure including beam management (also referred to as a SCell beam activation procedure), and thus a DL Rx direction used by the electronic device 110 in the SCell 171(2) can be determined using the SCell beam activation procedure. Signal qualities of reference signals (RSs) from the network 101 (e.g., the base station 120) can be determined by the electronic device 110. The signal qualities can indicate powers or qualities of the RSs received by the electronic device 110 from corresponding DL Rx directions (e.g., 111A(1)-111A(2)). At least one of the signal qualities can be reported by the electronic device 110 to the network 101 where the at least one of the signal qualities can correspond to at least one of the DL Rx directions. A DL Rx direction to be used by the electronic device 110 in the SCell 171(2) for the DL communication with the network 101 can be determined by the network 101 (e.g., by the base station 120) based on the at least one of the signal qualities. For example, the selected DL Rx direction is one of the at least one of the DL Rx directions. Subsequently, a signal indicating the selected DL Rx direction and optional an uplink (UL) Tx direction to be used by the electronic device 110 in the SCell 171(2) for UL communication with the network 101 can be transmitted by the network 101 and then received by the electronic device 110. The UL Tx direction can be opposite to the DL Rx direction, for example, when the electronic device 110 is configured with beam correspondence. The above description can be suitably adapted to determine a beam pair (e.g., the beam pair 105) for the SCell 171(2).

In an example, the communication system 100 can be a fifth generation (5G) system (5GS), the network 101 includes a 5G radio access network (RAN) (or Next Generation (NG) RAN) and a 5G core network (5GC) that uses 5G mobile network technology. The base station 120 is a next generation Node B (gNB) specified in 5G new radio (NR) air interface standards developed by 3rd Generation Partnership Project (3GPP). The cell group 170 is a master cell group (MCG) 170 between the base station 120 and the electronic device 110. The cell 171(1) is a primary cell (PCell) activated in a low frequency range (e.g., in a frequency range 1 (FR1)) and the SCell 171(2) is a cell to be activated first, for example, in the FR2. The SCell 171(2) can be activated using the SCell beam activation procedure. The RSs can be transmitted from the base station 120 along one or more of DL Tx directions (e.g., 121A-122A) and can be received along the DL Rx directions (e.g., 111A(1)-111A(2)). In an example, the selected DL Rx direction is determined to be the Rx direction 111A(1). Similarly, the beam pair 105 can be determined using the SCell beam activation procedure.

The network 101 can include various base stations, such as the base station 120 and a base station 129, and core nodes that are interconnected using any suitable network technology, such as wired, wireless, a cellular communication technology, a local area network (LAN), a wireless LAN (WLAN), a fiber optical network, a wide area network (WAN), a peer-to-peer network, the Internet, and the like. In some embodiments, the network 101 provides wireless communication service to electronic devices, such as the electronic device 110, using any suitable wireless communication technology, such as second generation (2G), third generation (3G), and fourth generation (4G) mobile network technologies, 5G mobile network technology, global system for mobile communication (GSM), long-term evolution (LTE) technologies, NR technologies, and the like. In some examples, the network 101 employs wireless communication technologies developed by 3GPP. In an example, the base stations in the network 101 form one or more access networks and the core nodes form one or more core networks. An access network can be a RAN, such as a 5G RAN or NG RAN, an Evolved Universal Terrestrial Radio Access (E-UTRA), and the like. A core network can be an evolved packet core (EPC), a 5GC, and the like.

In various examples, a base station (e.g., the base station 120, the base station 129) can be referred to as a Node B, an evolved Node B, a gNB, and the like. In an example, the base stations 120 and 129 are gNBs specified in 5G NR air interface standards developed by 3GPP. The base stations 120 and 129 include hardware components and software components configured to enable wireless communications between the base stations 120 and 129 and the electronic device 110, respectively. Further, the core nodes include hardware components and software components to form a backbone to manage and control the services provided by the network 101.

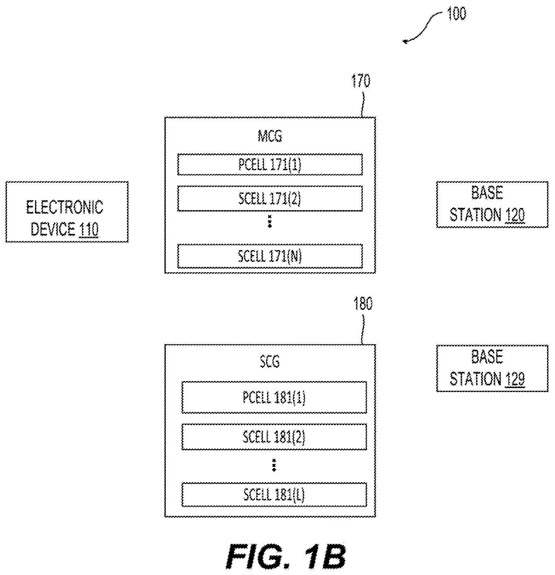

In some embodiments, the electronic device 110 and the network 101 are configured to deploy CA and/or dual connectivity (DC) to enhance a throughput (e.g., a data rate, a bandwidth) of the electronic device 110. Fig. 1B shows cell groups 170 and 180 in the communication system 100 according to an embodiment of the disclosure.

In an example, CA is employed by the communication system 100, and the cell group 170 is configured for the electronic device 110 to communicate with the base station 120. Referring to Figs. 1A-1B, the cell group 170 can be the MCG 170 including the PCell 171(1) and SCell(s) 171(2)-171(N) where N is an integer larger than 1. Each cell in the cell group 170 can have a respective frequency (or carrier frequency, a carrier, a component carrier (CC)). A plurality of the carriers can be aggregated and transmitted in parallel to/from the electronic device 110 in CA, and thus increasing a data rate.

DC can be deployed by the communication system 100, and thus a plurality of cell groups can be configured for the electronic device 110 to communicate with, for example, a plurality of base stations. Referring to Fig. 1B, the MCG 170 can be configured for the electronic device 110 to communicate with the base station 120, and a Secondary Cell Group (SCG) 180 can be configured for the electronic device 110 to communicate with the base station 129. The SCG 180 can include a primary secondary cell (PSCell) 181(1) and SCell(s) 181(2)-181(L) where L is an integer larger than 1.

In CA and/or DC, SCell(s) (e.g., the SCell 171(2), the SCell 181(2)) can be configured for the electronic device 110. In an example, a large amount of data is to be delivered to the electronic device 110, one or more of the SCell(s) can be activated, for example, using a SCell activation procedure to increase the throughput. Activated SCell(s) can also be deactivated when a large throughput is not needed, and thus an activation/deactivation mechanism of SCell(s) is employed to save energy consumption of the electronic device 110.

Different carrier frequencies can be used in the communication system 100. Carrier frequencies less than 6 GHz can be referred to as low frequencies, such as between 600 MHz to less than 6 GHz. For example, the FR1 includes frequencies below 6 GHz. As described above, high frequencies can be used as carrier frequencies to increase a network capacity (e.g., a data rate, a bandwidth). In an example, the high frequencies are higher than 6 giga-Hertz (GHz), such as between 24 - 84 GHz. The FR2 can include frequencies in the range 24.25 - 52.6 GHz. Carrier frequencies in the FR2 can also be referred to as millimeter Wave (mmWave) frequencies. HF signals can experience large propagation loss and can be sensitive to blockage. Accordingly, for the HF signals, a base station (e.g., the base station 120) and the electronic device 110 can perform beamformed transmission and/or reception.

Multiple frequency bands can be allocated in the FR2. Adjacent frequency bands can be separated by frequency gaps. CA of HF carriers or cells in a same frequency band of the FR2 can be referred to as intra-band CA. CA of HF carriers or cells in multiple frequency bands can be referred to as inter-band CA. In some examples, a frequency difference of two carrier frequencies in the intra-band CA is smaller than a frequency difference of two carrier frequencies in the inter-band CA.

In general, a beam is allocated with radio resources including a set of time and/or frequency resources. In beamformed transmission, signal energy can be focused predominantly toward a specific direction, such as the direction 121A associated with the Tx beam 121. As a result, an increased antenna transmission gain can be achieved in contrast to omnidirectional antenna transmission. Similarly, in beamformed reception, signal energy received predominantly from a specific direction can be combined to obtain a higher antenna reception gain in contrast to omnidirectional antenna reception, such as the direction 111A(1) associated with the Rx beam 111(1). Therefore, the beam can be associated with a direction indicating a dominant propagation direction of signal energy of the beam, and thus can be referred to as a directional beam. For example, in the cell 171(2), the beams 121-122 transmitted from the base station 120 mainly propagate along the directions 121A-122A, respectively.

In some embodiments, a beam can refer to a signal or a channel transmitted from or received by the electronic device 110 or the base station 120. A beam transmitted from the electronic device 110 along a direction can be referred to as an UL Tx beam and the direction can be referred be as an UL Tx direction. A beam received by the electronic device 110 from a direction can be referred to as a DL Rx beam (e.g., the DL Rx beam 111(1)) and the direction can be referred be as a DL Rx direction (e.g., the DL Rx direction 111A(1)). In an embodiment, the electronic device 110 is configured with beam correspondence, and thus the UL Tx direction can be opposite to the DL Rx direction.

A beam transmitted from the base station 120 along a direction can be referred to as a DL Tx beam (e.g., the DL Tx beam 121) and the direction can be referred be as a DL Tx direction (e.g., the DL Tx beam 121A). A beam received by the base station 120 from a direction can be referred to as an UL Rx beam and the direction can be referred be as an UL Rx direction.

A DL beam pair for the DL communication can be formed using a DL Tx beam and a DL Rx beam. In an example, the beam pair 105 is formed using the DL Tx beam 121 and the DL Rx beam 111(1). An UL beam pair for the UL communication from the electronic device 110 to the base station 120 can be formed using an UL Tx beam and an UL Rx beam. In an embodiment, beam directions in the DL beam pair correspond to beam directions in the UL beam pair, for example, when the electronic device 110 is configured with beam correspondence, and thus an UL Tx direction of the UL Tx beam is opposite to a DL Rx direction of the DL Rx beam, and an UL Rx direction of the UL Rx beam is opposite to a DL Tx direction of the DL Tx beam.

A base station (e.g., the base stations 120) can be configured to control one or more antenna arrays to form directional beams (Tx or Rx beams) for transmitting or receiving the HF signals. In some examples, different sets of antenna arrays are distributed at different locations to cover different serving areas. Each such set of antenna arrays can be referred to as a transmission reception point (TRP). A TRP can transmit or receive any suitable number of Tx beams or Rx beams along multiple directions.

Referring to Fig. 1A, the base station 120 can control a TRP 127 to form the cell 171(1) and a TRP 128 to form the cell 171(2). The base station 120 can control the TRP 128 to form Tx beams (e.g., the DL Tx beams 121-122) to cover the cell 171(2). The Tx beams can be generated simultaneously or in different time intervals. In an example, a plurality of electronic devices is served by the base station 120. In an example, the electronic device 110 is within the cells 171(1)-171(2) and can be served by the cells 171(1)-171(2). The cells 171(1)-171(2) can partially overlap, as shown in Fig. 1A.

In general, beam management, e.g., a set of procedures to acquire and maintain a set of Tx (e.g., the beam 121) and Rx (e.g., the beam 111(1)) beams or beam pairs (e.g., the beam pair 105) can be implemented to form and maintain a suitable link between the base station 120 and the electronic device 110 for UL and DL communication or transmission/reception.

According to aspects of the disclosure, when the SCell 171(2) is configured with a HF carrier and is to be activated, for example, in the FR2 that uses beam formed transmission/reception, the SCell beam activation procedure can be implemented to activate the SCell 171(2). The SCell beam activation procedure can be implemented by the electronic device 110 and/or the network 101 (e.g., the base station 120). The SCell 171(2) can be a cell to be activated first in the FR2 or can be a cell to be activated first in a frequency band in the FR2. The electronic device 110 can be any suitable electronic device that can implement a portion of the SCell beam activation procedure. The electronic device 110 can be configured to communicate with the network 101 using a plurality of the cells 171(1)-171(N) in the MCG 170 in CA. The electronic device 110 can also be configured to communicate with the network 101 using the MCG 170 and SCG 180 in DC (e.g., E-UTRA and NR DC). In an example, the electronic device 110 is connected to the base station 120 using NR radio access, and to the base station 129 using E-UTRA. In an example, the electronic device 110 is connected to the base station 129 using directional Tx/Rx beams, omnidirectional beams, and the like.

In an example, the electronic device 110 is a terminal device (e.g., user equipment) for wireless communication, such as a cell phone, a mobile phone, a smart phone, a tablet computer, a laptop computer, a smart device, a wearable device, a device carried in a vehicle, and the like. The electronic device 110 can employ one or more antenna arrays to generate directional Tx or Rx beams for transmitting or receiving the HF signals, respectively. The electronic device 110 can also include suitable transceivers and antennas that transmit and receive omnidirectional wireless signals, such as in the FR1.

Referring to Fig. 1A, the electronic device 110 can include a transceiver 130, processing circuitry 150, and memory 146 that are coupled together, for example, using a bus 145. The transceiver 130 is configured to receive and transmit wireless signals. In some embodiments, the transceiver 130 is configured to receive various RSs transmitted from the network 101 (e.g., the base station 120 and/or the base station 129) and received from corresponding DL Rx directions. Signal qualities (or beam qualities) of the RSs can be used in beam management and/or cell activation (e.g., SCell activation) in cell(s) configured for the electronic device 110. RSs can include a channel-state information reference signal (CSI-RS), a synchronization signal block (SSB), and the like. In some embodiments, an SSB that includes resources in time and frequency is formed with a primary synchronization signal (PSS), a secondary synchronization signal (SSS), and a Physical Broadcast Channel (PBCH). In an example, RS(s) (CSI-RS(s) and/or SSB(s)) can be used to activate the SCell 171(2).

The transceiver 130 can receive signals indicating a SCell activation command from the network 101 (e.g., the base station 120), transmission configuration indication (TCI) information, spatial relation for uplink signal, and/or the like. In an example, the SCell activation command is transmitted using Media Access Control (MAC) control element (CE) from the base station 120.

The transceiver 130 is configured to transmit various signals, such as the HF signals and the LF signals. An UL physical channel, such as a PUCCH or a NR-PUCCH, can be configured for the SCell 171(2). In an example, the transceiver 130 can transmit cell-related information, and/or the like to the base station 120 via a PUSCH, a PUCCH, or the like. The transceiver 130 can transmit signals for beam reporting, CSI reporting, and/or the like.

In an example, the transceiver 130 includes a first transceiver 132 that transmits and receives LF signals (e.g., signals in the FR1, omnidirectional wireless signals) and a second transceiver 134 that transmits and receives the HF signals (e.g., signals in the FR2) including Tx and Rx beams, such as the Rx beam 111(1). In the Fig. 1A example, the direction 111A(1) of the Rx beam 111(1) and the direction 121A of the Tx beam 121 in the beam pair 105 can be matched or optimized by tuning respective antennas of the electronic device 110 and/or the base station 120.

The processing circuitry 150 can be configured to implement cell activation, a portion of the SCell beam activation procedure, and/or the like. The SCell beam activation procedure can include beam measurements based on RS(s) and beam reporting, cell synchronization (e.g., SCell synchronization), channel state information (CSI) determination (or CSI process) and CSI reporting, and the like.

As described above, the SCell 171(2) configured for the electronic device 110 is to be activated and the SCell 171(2) is in the FR2. In an embodiment, the SCell 171(2) is a cell to be activated first in the FR2. For example, activated cell(s) (e.g., the PCell 171(1)) are not in the FR2 and can be in the FR1. In an embodiment, the SCell 171(2) is a cell to be activated first in a frequency band in the FR2. For example, activated cell(s) (e.g., the PCell 171(1)) can be in the FR2, and frequency band(s) where the activated cell(s) are located are different from the frequency band that includes the SCell 171(2).

A DL Rx direction (or a DL Rx beam along the DL Rx direction) used in the SCell 171(2) by the electronic device 110 to receive signals from the network 101 can be determined. An UL Tx direction (or an UL Tx beam along the UL Tx direction) used in the SCell 171(2) by the electronic device 110 to transmit signals to the network 101 can also be determined. As described above, when the electronic device 110 is configured with beam correspondence, the DL Rx direction is determined and the UL Tx direction is the opposite to the DL Rx direction.

To determine the DL Rx direction, the processing circuitry 150 can measure signal qualities, such as reference signal received powers (RSRPs), reference signal received qualities (RSRQs), of RS(s) transmitted from the base station 120. The RS(s) can be transmitted from the base station 120 using one or more DL Tx directions (e.g., 121A-122A). The one or more DL Tx directions can be transparent to the electronic device 110 or can be known by the electronic device 110. The RS(s) can be received by the electronic device 110 from one or more DL Rx directions.

Multiple DL Rx directions can be used to receive the RS(s) and the processing circuitry 150 can determine the signal qualities of the RS(s) received from the corresponding DL Rx directions. The signal qualities can indicate powers of the RS(s) received from corresponding DL Rx directions.

Table 1 shows an example of beam measurement results according to an embodiment of the disclosure. Referring to Fig. 1A and Table 1, the RSs includes RS1-RS4. The DL Rx directions can include Rx1-Rx4. The Rx1-Rx4 can be different from each other. Alternatively, one (e.g., Rx1) of the Rx1-Rx4 can be identical to another (e.g., Rx2) of the Rx1-Rx4. The determined signal qualities are Q1-Q4 (e.g., RSRPs in dBm). For example, Q1 (e.g., a RSRP1) corresponds to RS1 and Rx1, and thus can indicate a power of RS1 received with the DL Tx direction Rx1. For example, a spatial filter in the electronic device 110 is set such that RS1 is received predominantly from Rx1, and the measured power is RSRP1.

As shown above, two of the RSs (e.g., RS1 and RS2) can be received using a same DL Rx direction (e.g., 111A(1)). DL Tx direction(s) of RS1-RS2 can be transparent to the electronic device 110. The DL Tx direction(s) of RS1-RS2 can be identical or different.

**Table 1: Beam measurement results**

| Reference signals | DL Rx directions | Signal qualities |
|---|---|---|
| RS1 | Rx1 (e.g., 111A(1)) | Q1 (e.g., RSRP1) |
| RS2 | Rx2 (e.g., 111A(1)) | Q2 (e.g., RSRP2) |
| RS3 | Rx3 (e.g., 111A(2)) | Q3 (e.g., RSRP3) |
| RS4 | Rx4 (e.g., 111A(2)) | Q4 (e.g., RSRP4) |

Table 2 shows an example of beam measurement results according to an embodiment of the disclosure. Referring to Fig. 1A and Table 2, the RSs includes RS5-RS6. The Rx directions can include Rx5-Rx6 that are different. The signal qualities determined are Q5-Q6. The RSs are received using different DL Rx directions (e.g., 111A(1) and 111A(2)). DL Tx direction(s) of RS5-RS6 can be transparent to the electronic device 110. The DL Tx direction(s) of RS5-RS6 can be identical or different.

**Table 2: Beam measurement results**

| Reference signals | DL Rx directions | Signal qualities |
|---|---|---|
| RS5 | Rx5 (e.g., 111A(1)) | Q5 |
| RS6 | Rx6 (e.g., 111A(2)) | Q6 |

In an embodiment, the base station 120 is configured to vary DL Tx directions and the processing circuitry 150 can determine the signal qualities of RSs corresponding to a plurality of combinations of DL Rx beams (or directions) and DL Tx beams (or directions) (or beam pairs). Table 3 shows an example of beam measurement results according to an embodiment of the disclosure. The RSs includes RS7-RS10. The DL Rx directions include Rx7-Rx10. The DL Tx directions are Tx7-Tx10. The signal qualities determined are Q7-Q10. For example, Q7 corresponds to RS7 and a combination of Rx7 and Tx7, and thus can indicate a RSRP of RS7 transmitted from the base station 120 using the DL Tx direction Tx7 and received using the DL Rx direction Rx7. For example, Q7 can indicate the RSRP of RS7 transmitted using the beam pair 105.

**Table 3: Beam measurement results**

| Reference signals | DL Rx directions | Tx directions | Signal qualities |
|---|---|---|---|
| RS7 | Rx7 (e.g., 111A(1)) | Tx7 (e.g., 121A) | Q7 |
| RS8 | Rx8 (e.g., 111A(1)) | Tx8 (e.g., 122A) | Q8 |
| RS9 | Rx9 (e.g., 111A(2)) | Tx9 (e.g., 121A) | Q9 |
| RS10 | Rx10 (e.g., 111A(2)) | Tx10 (e.g., 122A) | Q10 |

Referring to Fig. 1A, the signal qualities of the RSs can be measured using any suitable methods and in any suitable layer (e.g., layer 1 (L1) (or physical layer), layer 3 (L3) (or radio resource control (RRC) layer)). Thus, the signal qualities can include L1-RSRPs from L1 beam measurements or L1-RSRP beam management, L3-RSRPs from L3 beam measurements or L3-RSRP beam management, and/or the like.

L1-RSRPs can be obtained based on SSB(s) and/or CSI-RS(s). The processing circuitry 150 can measure L1-RSRP(s). In an example, L1-RSRP(s) of M DL beam pair(s) can be measured by the processing circuitry 150 where M is a positive integer. L3-RSRPs can be obtained based on SSB(s) including SS/PBCH blocks.

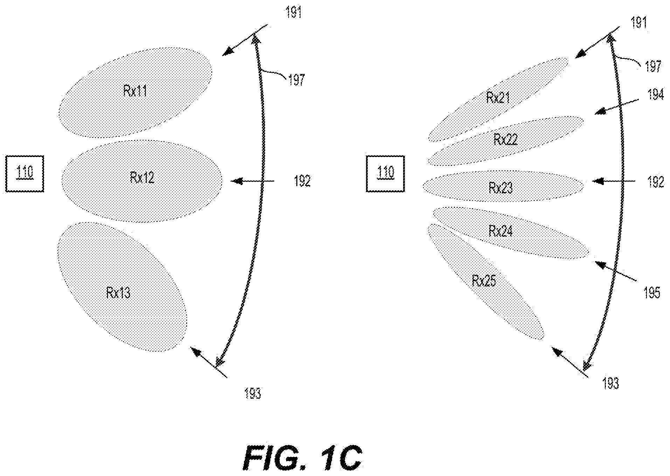

In an embodiment, a DL Rx beam used in an L1 beam measurement to obtain an L1-RSRP can be narrower than a DL Rx beam used in an L3 beam measurement to obtain an L3-RSRP. Referring to Fig. 1C, DL Rx beams Rx11, Rx12, and Rx13 having directions 191-193, respectively can be used in L3 beam measurements to obtain L3-RSRPs for the electronic device 110. An angular range 197 is covered by two ends of the directions 191-193. DL Rx beams Rx21, Rx22, Rx23, Rx24, and Rx25 having directions 191, 194, 192, 195, and 193, respectively can be used in L1 beam measurements to obtain L1-RSRPs for the electronic device 110. More (e.g., 5) DL Rx directions (191-195) are covered in the same angular range 197 since the DL Rx beams Rx21-Rx25 used in L1 beam measurements are narrower than the DL Rx beams Rx11-Rx13 used in L3 beam measurements.

Referring to Fig. 1A, the processing circuitry 150 can implement beam reporting, for example, to report one or more of the signal qualities (e.g., RSRPs, L1-RSRPs, L3-RSRPs) determined by the processing circuitry 150 to the network 101. A number of the one or more of the signal qualities is J, a positive integer. Each of the one or more of the signal qualities can correspond to a DL Rx direction used to receive the respective RS, as shown in Tables 1-3. In an embodiment, the J signal qualities being reported are best in the signal qualities. For example, the J signal qualities correspond to largest signal strengths, largest signal powers, or largest RSRPs in the signal qualities. RS(s), DL Rx direction(s), DL Tx direction(s), and/or the like that correspond to the J signal qualities can also be reported. The RS(s) can be reported using beam index or indices (e.g., SSB index or indices).

In an example, referring to Table 1, the signal qualities Q1-Q4 are RSRP1-RSRP4, and can be ranked as RSRP1, RSRP3, RSRP4, and RSRP2 based on the received powers. RSRP1 is the largest power and RSRP2 is the smallest power in RSRP1-RSRP4, and thus Q1 is the best (e.g., the largest power or RSRP) and Q2 is the worst (e.g., the least power or RSRP) of the signal qualities Q1-Q4. J is 2, so two best signal qualities Q1 and Q3 (e.g., the largest powers or RSRPs) in Q1-Q4 are reported by the processing circuitry 150. Further, beam indices of RS1 and RS3 and DL Rx directions Rx1 and Rx3 can be reported, as shown in Table 4.

**Table 4: An example of beam report**

| Reference signals | Rx directions | Signal qualities |
|---|---|---|
| RS1 | Rx1 (e.g., 111A(1)) | Q1 |
| RS3 | Rx3 (e.g., 111A(2)) | Q3 |

In an example, referring to Table 3, the signal qualities Q7-Q10 are RSRP7-RSRP10, and can be ranked as RSRP8, RSRP9, RSRP7, and RSRP10 based on the received powers. RSRP8 is the largest power and RSRP10 is the smallest power in RSRP7-RSRP10, and thus Q8 is the best (e.g., the largest power or RSRP) and Q10 is the worst (e.g., the least power or RSRP) of the signal qualities Q8-Q10. J is 3, so three best signal qualities Q8, Q9, and Q7 (e.g., the largest powers or RSRPs) in Q7-Q10 are reported by the processing circuitry 150. Further, beam indices of RS8, RS9, and RS7, DL Rx directions Rx8, Rx9, and Rx7, and DL Tx directions Tx8, Tx9, and Tx7 can be reported. Alternatively, the processing circuitry 150 can report the best three beam pairs (e.g., Rx8-Tx8, Rx9-Tx9, and Rx7-Tx7) to the base station 120 by beam reporting, as shown in Table 5. In an example, the best three beam pairs correspond to the largest RSRPs in the signal qualities.

**Table 5: An example of beam report**

| Reference signals | Beam pairs | Signal qualities |
|---|---|---|
| RS7 | Rx7-Tx7 (e.g., 111(1)-121A) | Q7 |
| RS8 | Rx8-Tx8 (e.g., 111(1)-122A) | Q8 |
| RS9 | Rx9-Tx9 (e.g., 111(2)-121A) | Q9 |

The processing circuitry 150 can implement cell synchronization (e.g., SCell synchronization with the SCell 171(2)), for example, after receiving an SCell activation command. The processing circuitry 150 can synchronize with and identify the SCell 171(2) by performing, for example, automatic gain control (AGC), retuning, cell search (e.g., acquiring time and frequency synchronization with the SCell 171(2), detecting a cell identification (ID) of the SCell 171(2)) based on SSBs and/or CSI-RSs, acquiring frequency and/or time fine synchronization, obtaining master information block (MIB) information, and/or the like. The SCell 171(2) can be determined to be identified by the electronic device 110, for example, after the MIB information is obtained.

In an embodiment, transmission configuration indication (TCI) information used for downlink channel(s) and RSs (e.g., CSI-RS reception) and indicating a spatial relation for uplink channel(s) and RSs (e.g., CSI reporting) can be signaled to the electronic device 110 from the network 101 (e.g., the base station 120), for example, through RRC, MAC CE, or DCI signaling. The TCI information can indicate the selected DL Tx direction to be used by the electronic device 110 for the DL communication with the network 101. The spatial relation information can indicate an UL Tx direction to be used by the electronic device 110 for the UL communication with the network 101. In other words, the network 101 may notify the electronic device 110 the DL Tx direction to be used by the network 101, and also the UL Tx direction to be used by the electronic device 110. The processing circuitry 150 can determine or calculate a CSI report based on the received TCI information and spatial relation information. The CSI report can include or indicate channel quality information (CQI), precoding matrix indicator (PMI), CSI-RS resource indicator (CRI), SS/PBCH resource block indicator (SSBRI), layer indicator (LI), rank indicator (RI), L1-RSRP, and/or the like. Subsequently, the processing circuitry 150 can report or transmit the CSI report to the network 101 (e.g., the base station 120).

Referring to Fig. 1B, in an embodiment, the SCell 171(3) is to be activated in the FR2 and the SCell 171(3) is not a cell to be activated first in the FR2. For example, another cell is already activated in the FR2. Accordingly, the processing circuitry 150 can acquire TCI information for the SCell 171(3) based on the activated cell in the FR2. In an example, the SCell 171(3) is in a same frequency band with the activated cell. The SCell 171(3) can be referred to as an intra-frequency SCell with the activated cell. In an example, a frequency difference between a carrier of the SCell 171(3) and a carrier of the activated cell is small, for example, smaller than a threshold. The activated cell can be the PCell 171(1), the SCell 171(2) in the MCG 170, the PSCell 181(1), one of the SCells 181(2)-181(L) in the SCG 180, or the like when the electronic device 110 is configured with CA and/or DC. Further, the processing circuitry 150 can synchronize with and identify the SCell 171(3) and implement CSI reporting, similarly as described above.

Referring to Fig. 1B, in an embodiment, the SCell 171(3) is to be activated in the FR2 and the SCell 171(3) is not a cell to be activated first in the FR2. For example, another cell is already activated in the FR2. Accordingly, the processing circuitry 150 can acquire TCI information for the SCell 171(3) independently. In an example, the SCell 171(3) is in a different frequency band with the activated cell. The SCell 171(3) can be referred to as an inter-frequency SCell with the activated cell. In an example, a frequency difference between a carrier of the SCell 171(3) and a carrier of the activated cell is large, for example, larger than a threshold.

The processing circuitry 150 can be implemented using various techniques, such as integrated circuits, one or more processors executing software instructions, and the like.

The memory 146 can be any suitable device for storing data and instructions to control operations (e.g., the SCell beam activation procedure) of the electronic device 110. In an example, the memory 146 stores the signal qualities (e.g., Tables 1-3) determined by the processing circuitry 150 associated with the SCell beam activation procedure, the CSI report, and software instructions to be executed by a processor, such as the processing circuitry 150.

In an embodiment, the memory 146 can be non-volatile memory, such as read-only memory, flash memory, magnetic computer storage devices, hard disk drives, solid state drives, floppy disks, and magnetic tape, optical discs, and the like. In an embodiment, the memory 146 can be a random access memory (RAM). In an embodiment, the memory 146 can include non-volatile memory and volatile memory.

The base station 120 can be configured to wirelessly transmit signals that indicate or include RSs, a SCell activation command, TCI information, and/or the like to the electronic device 110 to activate an SCell (e.g., the SCell 171(2)). Processing circuitry 160 in the base station 120 can be configured to implement a portion of the SCell beam activation procedure. The processing circuitry 160 can receive the one or more of the signal qualities from the electronic device 110. Subsequently, the processing circuitry 160 can implement beam selection and generate the TCI information for DL channel(s) and RSs (e.g., CSI-RS reception) and spatial relation for UL channel(s) and RSs (e.g., CSI reporting). For example, the processing circuitry 160 can determine the selected DL Txand UL Tx direction, a selected beam pair (e.g., the beam pair 105) to be used in the SCell 171(2) by the electronic device 110 for the DL communication with the network 101 based on the one or more of the signal qualities. The selected DL Tx direction or the selected beam pair can correspond to the best (e.g., largest signal strength, largest received power, largest RSRP) of the one or more of the signal qualities. Referring to Table 4, in an example, the one or more of the signal qualities (e.g., Q1-Q4) include Q1 (e.g., RSRP1) and Q3 (e.g., RSRP2). Further, RSRP1 is larger than RSRP3, and thus Q1 is the best (e.g., the largest RSRP) of Q1 and Q3. Accordingly, the processing circuitry 160 can determine the selected DL Tx direction to be Tx1 corresponding to Q1 and RS1. Alternatively, the processing circuitry 160 can determine the selected DL Tx direction to be a direction that is close to Tx1 and the selected UL Tx direction to be opposite to the DL Rx direction(or the selected UL can use the same beam to transmission the signals as the DL reception).

Referring to Table 5, in an example, the one or more of the signal qualities (e.g., Q7-Q10) include Q7 (e.g., RSRP7), Q8 (e.g., RSRP8) and Q9 (e.g., RSRP9) where RSRP8 is the largest of RSRP7-RSRP9. Accordingly, the processing circuitry 160 can determine the selected DL Tx direction to be Tx8 corresponding to Q8 and RS8 and the selected UL Tx direction to be opposite to Rx8. Alternatively, the processing circuitry 160 can determine the selected beam pair to include Rx8 and Tx8. For example, the selected beam pair is 111(1) and 122.

The processing circuitry 160 can determine the TCI information for DL channel(s) and RSs (e.g., CSI-RS reception) and the spatial relation for UL channel(s) and RSs (e.g., CSI reporting) to be used by the electronic device 110. The TCI information can indicate the selected DL Tx direction or the selected beam pair. The spatial relation information can also indicate a selected UL Tx direction.

The base station 120 can transmit a signal indicating the selected DL Tx direction or the selected beam pair to the electronic device 110. For example, the processing circuitry 160 can signal TCI information including, for example, the selected DL Rx direction or the selected beam pair used for DL channel(s) and RSs (e.g., the CSI-RS reception), and the spatial relation for UL channel(s) and RSs (e.g., the CSI reporting) to the electronic device 110, for example, through RRC, MAC CE, or DCI signaling.

The base stations 120 and 129 can employ one or more antenna arrays to generate directional Tx/Rx beams for transmitting or receiving the HF signals, respectively. The base stations 120 and 129 can also include suitable transceivers and antennas that transmit and receive omnidirectional wireless signals, such as signals in the FR1.

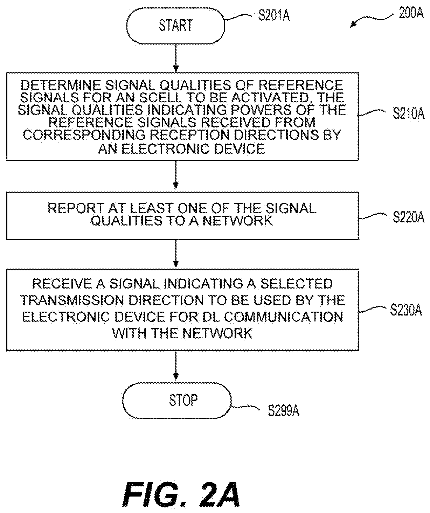

Fig. 2A shows a flowchart of an exemplary process 200A according to an embodiment of the disclosure. The process 200A can be used to implement, for example, a portion of the SCell beam activation procedure described above. In an example, an electronic device, such as the electronic device 110, is configured to perform the process 200A to activate a SCell (e.g., the SCell 171(2)) configured for the electronic device by a network (e.g., the network 101). The process 200A can be implemented for any suitable deactivated SCell in the FR2 or any deactivated FR2 cell. In an embodiment, the process 200A is implemented when the SCell is a cell to be activated first in the FR2. In an example, the SCell is the cell to be activated first in a frequency band in the FR2. In an embodiment, the process 200A is implemented when the SCell is a cell to be activated first in a frequency band in the FR2. For example, the FR2 includes a first frequency band and a second frequency band. Cell(s) in the first frequency band are activated and the SCell is in a cell to be activated first in the second frequency band. The process 200A starts at S201A, and proceeds to S210A.

At S210A, signal qualities of RSs transmitted from the network (e.g., the base station 120) to the electronic device can be determined. The RSs can be measured to obtain the signal qualities including RSRP(s), RSRQ(s), and the like. The signal qualities can indicate powers or qualities of the respective RSs received from corresponding DL Rx direction (or via DL Rx beams) by the electronic device. As described above, the signal qualities can include L1-RSRP(s), L3-RSRP(s), and/or the like. Measurement results, such as the beam measurement results shown in Tables 1-3, can be used to indicate the signal qualities of the respective RSs. The measurement results can include corresponding DL Rx directions (e.g., Rx1-Rx4). In addition, the measurement results can include corresponding DL Tx directions (e.g., Tx7-Tx10).

At S220A, at least one of the signal qualities can be reported to the network (e.g., the base station 120). The at least one of the signal qualities or the J signal qualities can be the J best (e.g., largest signal strengths, largest received powers, largest RSRPs) in the signal qualities, as described above with reference to Tables 4-5. In addition to the at least one of the signal qualities, at least one DL Tx direction, at least one beam index associated with at least one RS, and/or the like that correspond to the at least one of the signal qualities can be reported to the network, as described above with reference to Tables 4-5.

At S230A, a signal indicating a selected DL Tx direction can be received from the network. The selected DL Tx direction can be used by the electronic device for the DL communication with the network in the SCell. The selected DL Tx direction can be one of the at least one DL Tx direction. In an example, referring to Table 4, the selected DL Tx direction (e.g., 111A(1)) corresponds to the best (e.g., the largest RSRP or Q1) of the at least one (e.g., Q1 and Q3) of the signal qualities. Alternatively, the selected DL Tx direction is slightly different from 111A(1) that corresponds to the best (e.g., the largest RSRP or Q1) of the at least one (e.g., Q1 and Q3) of the signal qualities. In an example, the signal also indicates a selected DL Rx direction that can be combined with the selected DL Tx direction to form a DL beam pair.

The signal can also indicate an UL Tx direction to be used by the electronic device for the UL communication with the network. When beam correspondence is configured, the UL Tx direction can be opposite to the selected DL Rx direction.

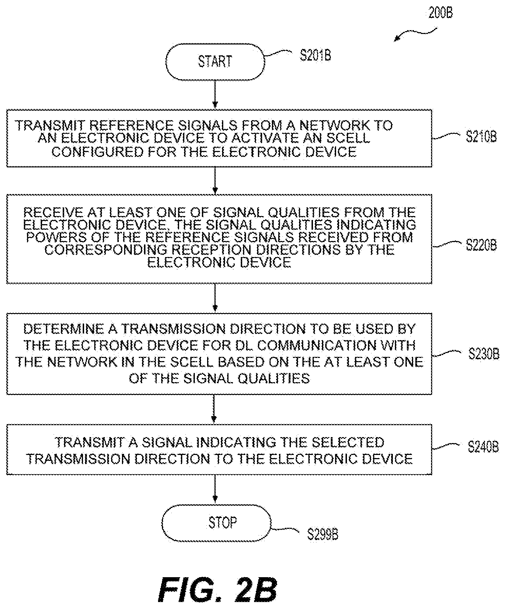

Fig. 2B shows a flowchart of an exemplary process 200B according to an embodiment of the disclosure. The process 200B can be used to implement a portion of the SCell beam activation procedure described above. In an example, a base station (e.g., the base station 120) is configured to perform the process 200B to activate a SCell (e.g., the SCell 171(2)) configured for an electronic device (e.g., the electronic device 110). In an embodiment, the process 200A is implemented when the SCell is a cell to be activated in the FR2. In an embodiment, the process 200A is implemented when the SCell is a cell to be activated in a frequency band in the FR2, as described above with reference to Fig. 2A. The process 200B starts at S201B, and proceeds to S210B.

At S210B, RSs can be wirelessly transmitted from the network (e.g., the base station 120) to the electronic device. The RSs can include CSI-RS(s), SSB(s), and/or the like. In addition, signals including a SCell activation command can be transmitted from the network to the electronic device.

At 220B, at least one of signal qualities of the respective RSs can be received from the electronic device. As described above, the signal qualities of the respective RSs can indicate powers of the RSs received by the electronic device from corresponding DL Rx directions. The signal qualities can be determined or measured by the electronic device, for example, using L1 beam measurement(s), L3 beam measurement(s), and the signal qualities can include L1-RSRP(s), L3-RSRP(s), respectively, as described above. The at least one of the signal qualities can include J best (e.g., largest signal powers, largest RSRPs) in the signal qualities, as described above, such as with reference to Tables 4-5 and S220A. The at least one of the signal qualities can correspond to at least one of DL Tx directions used by the electronic device.

At S230B, a DL Tx direction to be used by the electronic device in the SCell for the DL communication with the network can be determined based on the at least one of the signal qualities, as described above, such as with reference to S230A. The selected DL Tx direction can be one of the at least one of the DL Tx directions corresponding to the best (e.g., the largest signal power, the largest RSRP) signal quality in the at least one of the signal qualities. In an example, an UL Tx direction to be used by the electronic device in the SCell for the UL communication with the network is determined. The UL Tx direction can be opposite to the selected DL Rx direction. The UL Tx can use the same beam as DL Rx.

In addition, TCI information that indicates the selected DL Tx direction used for downlink transmission and spatial relation information that indicates the selected UL Tx direction used for uplink transmission (e.g., CSI reporting) by the electronic device can also be determined, as described above. The TCI information can be used for DL channel(s) and RSs (e.g., CSI-RS reception). The spatial relation information can be used for UL channel(s) and RSs (e.g., CSI reporting).

At S240B, a signal indicating the selected DL Tx direction can be transmitted to the electronic device. In an example, the signal also includes the TCI information.

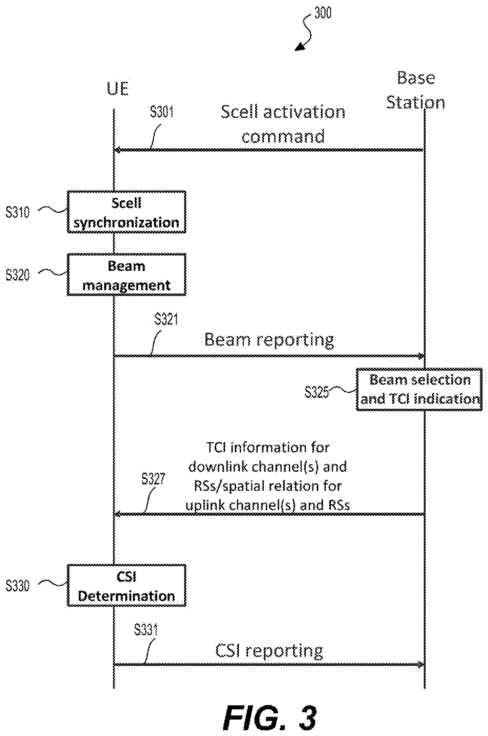

Fig. 3 shows an exemplary process 300 according to embodiments of the disclosure. The process 300 can be used to implement the SCell beam activation procedure described above. In an example, user equipment (UE) (e.g., the electronic device 110) and a base station (e.g., the base station 120) are configured to perform the process 300 to activate a SCell (e.g., the SCell 171(2)) configured for the electronic device by the base station. The SCell can also be referred to as a target SCell. The UE can be served by a cell group (e.g., the MCG 170) that includes the SCell and a PCell (e.g., the PCell 171(1)). The cell group can also include additional SCell(s) that are configured or activated for the UE. In an embodiment, the process 300 is implemented when the SCell is a cell to be activated first in the FR2 or a first mm Wave SCell to be activated. In an embodiment, the process 300 is implemented when the SCell is a cell to be activated first in a frequency band in the FR2, as described above with reference to Fig. 2A.

At S301, a SCell activation command to activate the SCell is sent from the base station and received by the UE. The SCell activation command can be sent using MAC-CE.

At S310, the UE can synchronize with and identify the SCell based on synchronization signals from the base station. In an embodiment, AGC retuning, cell search, frequency/timing fine synchronization, obtaining MIB information, and/or the like can be implemented. The SCell to be activated can be determined to be identified by the UE after the MIB information is obtained successfully.

At S320, the UE cam implement beam management, such as L1-RSRP beam management as described above with references to Fig. 1A and S210 in Fig. 2. RS(s), such as CSI-RS(s) and/or SSB(s), from the network can be received and subsequently measured to determine signal qualities of the RS(s), such as L1-RSRP(s). The UE can determine signal qualities for a plurality of beam pairs (also referred to as Rx-Tx beam pairs). For example, in Table 3, the UE can determine Q7-Q10 that correspond to the beam pairs (Rx7-Tx7, Rx8-Tx8, Rx9-Tx9, and Rx10-Tx10), respectively. Measurement results, such as shown in Tables 1-3, can be used by the base station to determine a selected DL Tx beam and/or a selected beam pair (e.g., including a DL Rx beam and a DL Tx beam) to be used by the electronic device in the SCell depending on signaling of the base station.

In an example, the UE can obtain an order of the Rx-Tx beam pairs by the L1-RSRP beam management. The order can be ranked according to beam qualities. Referring to Table 3, the order can be Rx8-Tx8, Rx7-Tx7, Rx9-Tx9, and Rx10-Tx10 where Q8 is the best (e.g., the largest L1-RSRP) and Q10 is the worst (e.g., the least L1-RSRP) of the signal qualities.

At S321, the UE can implement beam reporting, and thus a beam report can be sent to the base station. The beam report can indicate or include the J best beam pairs that correspond to the largest signal powers, such as the largest L1-RSRPs, where J is an integer larger than 0. For example, referring to Table 5, Q7-Q9 are the best (e.g., the largest L1-RSRPs) of Q7-Q10, and the beam report can include the J (e.g., 3) best signal qualities (e.g., Q7, Q8, and Q9), the corresponding beam pairs (e.g., Rx7-Tx7, Rx8-Tx8, and Rx9-Tx9), and the corresponding RSs (e.g., RS7-RS9). The beam report can include beam indices of the corresponding RSs. In an embodiment, S321 is implemented after S320.

At S325, the base station can implement beam selection and determine TCI information, for example, for DL channel(s) and RSs (e.g., CSI-RS reception) and spatial relation information for UL channel(s) and RSs (e.g., CSI reporting), as described above with references to Fig. 1A and Fig. 2B. When or after the base station receives the beam report from the UE, the base station can determine a suitable beam pair for the CSI reporting based on the beam report, such as the J best beam pairs. Further, the base station can determine the TCI information for the downlink transmission of the SCell and the spatial relation for the uplink transmission. For example, the base station can determine that the selected beam pair for the CSI reporting is Rx8-Tx8 when Q8 is the best signal quality in Q7-Q9. The selected beam pair can also be slightly different from Rx8-Tx8. For example, the selected beam pair is between Rx7-Tx7 and Rx8-Tx8. The TCI information/spatial relation information can indicate the selected beam pair, e.g., including a selected Tx direction. In an example, the TCI information implicitly indicates the selected beam pair, e.g., including a selected Tx direction. In an example, the TCI information includes a selected Tx direction to be used in the SCell.

At S327, the base station can signal the TCI information (also referred to as TCI indication) for downlink channels and RSs (e.g., the CSI-RS reception) and the spatial relation information for UL channels and RSs (e.g., the CSI reporting) to the UE. In an embodiment, S327 is implemented after S325.

At S330, the UE can determine a CSI report based on the TCI information and spatial relation information signaling, as described above with reference to Fig. 1A.

At 331, the UE can implement CSI reporting by reporting the valid CSI report to the base station, for example, using the selected Tx direction.

In an example, the process 300 is determined to be completed after the base station successfully receives the valid CSI reporting by the SCell from the UE, and the SCell is determined to be activated in the FR2.

In an embodiment, S301 and S310 are implemented prior to S320. In an embodiment, S330 and S331 are implemented after step S327.

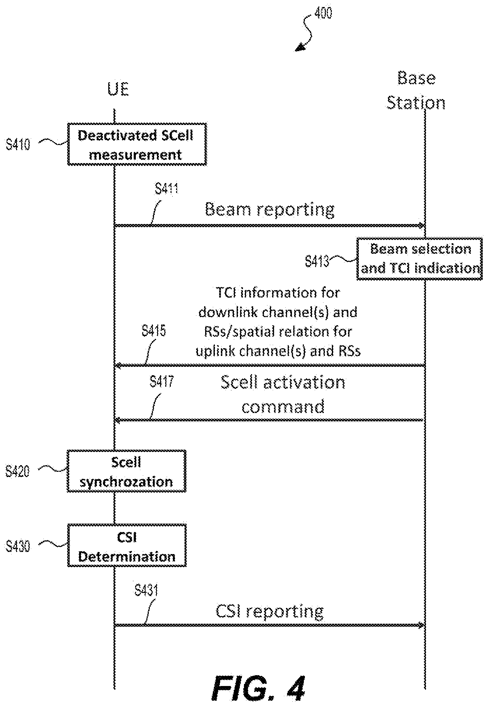

Fig. 4 shows an exemplary process 400 according to embodiments of the disclosure. The process 400 can be used to implement the SCell beam activation procedure. In an example, user equipment (UE) (e.g., the electronic device 110) and a base station (e.g., the base station 120) are configured to perform the process 400 to activate a SCell (e.g., the SCell 171(2)) that is configured and is deactivated for the electronic device by the base station. The SCell can also be referred to as a target SCell. The UE can be served by a cell group (e.g., the MCG 170) that includes the SCell and a PCell (e.g., the PCell 171(1)). The cell group can also include additional SCell(s) that are configured or activated for the UE. In an embodiment, the process 300 is implemented when the SCell is a cell to be activated first in the FR2 or a first mm Wave SCell to be activated. In an embodiment, the process 300 is implemented when the SCell is a cell to be activated first in a frequency band in the FR2, as described above with reference to Fig. 2A.

At S410, the UE can implement beam management, such as deactivated SCell measurement (or SCell measurement or beam measurement) for the deactivated SCell. The beam management can be a L3-RSRP beam management as described above with references to Fig. 1A and S210A in Fig. 2A. RS(s), such as SSB(s) including SS(s) and PBCH, from the base station can be received and subsequently measured to determine signal qualities (e.g., L3-RSRPs) of the RS(s). The UE can determine the signal qualities for a plurality of DL Rx beams. For example, as shown in Table 1, the UE can determine Q1-Q4 that correspond to the DL Rx beams (Rx1-Rx4), respectively.

At S411, the UE can implement beam reporting, and thus transmit a beam report to the base station. The beam report can indicate or include measurement results (e.g., at least one of the signal qualities, L3-RSRPs) with at least one beam index (e.g., SSB index or SSB indices) for the deactivated SCell.

At S413, the base station can implement beam selection and determine TCI information, for example, for DL channels and RSs (e.g., CSI-RS reception) and spatial relation information for UL channels and RSs (e.g., CSI reporting), as described above with references to Fig. 1A, Fig. 2B, and S325 in Fig. 3. When the base station receives the beam report from the UE, the base station can determine a suitable beam pair for the CSI reporting based on the beam report (e.g., the beam index or indices). The TCI information can indicate the selected Tx direction to be used by the UE for the DL communication with the base station. The TCI information can include a TCI state determined based on the beam report (e.g., the beam index or indices). The spatial relation information can indicate the selected Tx direction to be used by the UE for the UL communication with the base station. The spatial relation information can include a spatial relation determined based on the beam report (e.g., the beam index or indices).

At S415, the base station can signal the TCI information (also referred to as TCI indication) for DL channel(s) and RSs (e.g., the CSI-RS reception) and the spatial relation information for UL channels and RSs (e.g., the CSI reporting) to the UE.

At S417, a SCell activation command to activate the SCell is sent from the base station and received by the UE. The SCell activation command can be sent using MAC-CE.

At S420, the UE can synchronize with and identify the SCell based on synchronization signals. In an embodiment, AGC retuning, cell search, frequency/timing fine synchronization, obtaining MIB information, and/or the like can be implemented. The SCell to be activated can be determined to be identified by the UE after the MIB information is obtained successfully.

At S430, the UE can determine a CSI report based on the TCI information signaling.

At 431, the UE can implement CSI reporting by reporting the valid CSI report to the base station, for example, using the selected Tx direction indicated in the TCI information.

In an example, the process 400 is determined to be completed after the base station successfully receives the valid CSI reporting by the SCell from the UE, and the SCell is determined to be activated in the FR2.

In an embodiment, certain steps in the process 400, such as S417, S420, S430, and S431 are implemented after step S411. In an example, the SCell activation command is received (e.g., in S417) no later than a time when the UE receives MAC-CE command for TCI activation. In an example, the SCell activation command is received after L3-RSRP reporting. In an example, S415 and S417 can be configured at a same time.

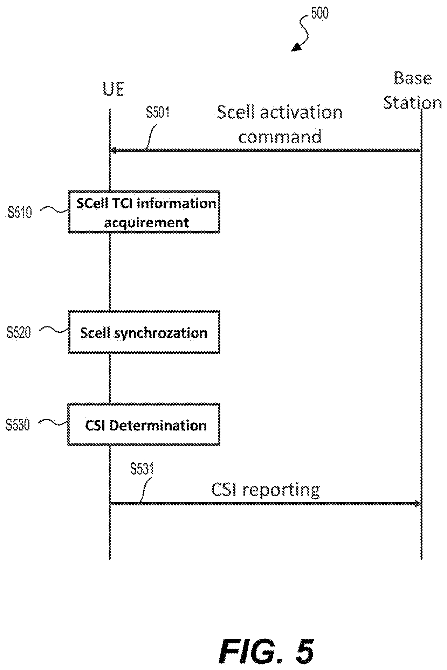

Fig. 5 shows an exemplary process 500 according to embodiments of the disclosure. The process 500 can be used to implement a SCell beam activation procedure. In an example, UE (e.g., the electronic device 110) and a base station (e.g., the base station 120) are configured to perform the process 500 to activate a SCell (e.g., the SCell 171(3)) that is configured and is deactivated for the UE by the base station. The SCell can also be referred to as a target SCell. The UE can be served by a cell group (e.g., the MCG 170) that includes the SCell and a PCell (e.g., the PCell 171(1)). The cell group can also include additional SCell(s) that are configured or activated for the UE. In an example, a FR2 activated cell, such as the PCell, another SCell in the cell group, or a cell (e.g., the PSCell 181(1)) in a different cell group (e.g., the SCG 180), can be activated in the FR2, and thus the SCell is not a cell to be activated first in the FR2. In an example, the FR2 activated cell is in a same frequency band in the FR2 with the SCell, and thus the SCell is not a cell to be activated first in the frequency band.

At S501, a SCell activation command to activate the SCell is sent from the base station and received by the UE. The SCell activation command can be sent using MAC-CE.

At S510, TCI information for the SCell to be activated can be acquired based on the FR2 activated cell. In an example, the SCell is in the same frequency band with the FR2 activated cell. Thus, a spatial filter used for the FR2 activated cell can be used by the SCell, and a DL Rx direction or a beam pair used for the FR2 activated cell can be used by the SCell. Similarly, SRS transmission for the SCell to be activated can be acquired based on the FR2 activated cell, such as spatial relation information from the FR2 activated cell.

At S520, the UE can synchronize with and identify the SCell by, for example, AGC retuning, cell search, frequency/timing fine synchronization, obtaining MIB information, and/or the like. The SCell to be activated can be identified by the UE after the MIB information is obtained successfully.

At S530, the UE can determine a CSI report based on the TCI information and the CSI transmission for the SCell to be activated.

At S531, the UE can implement CSI reporting by reporting the valid CSI report to the base station.

In an example, the process 500 is determined to be completed after the base station successfully receives the valid CSI reporting by the SCell from the UE, and the SCell is activated in the FR2.

A plurality of the processes 200A, 200B, 300, 400, and 500 can be suitably combined to implement the SCell beam activation procedure. In an example, the processes 200A and 200B are combined to implement the SCell beam activation procedure for a SCell that is a cell to be activated in the FR2. In an example, the SCell is to be activated first in the FR2. In an example, the SCell is to be activated first in a frequency band in the FR2. The process 500 can be further combined with the processes 200A and 200B to activate a SCell that is not a first cell to be activated in the intra-band FR2. Similarly, the process 500 can be combined with the process 300 or the process 400.

In an embodiment, the SCell is an SCell to be activated n the FR2 (or a frequency band in the FR2). The SCell is known to the UE when the following conditions are satisfied. During a period before the UE receives a last activation command for PDCCH TCI, PDSCH TCI (when applicable) and a semi-persistent CSI-RS for CQI reporting (when applicable), the UE has sent a valid L3-RSRP measurement report with a SSB index. In addition, a SCell activation command is received after the L3-RSRP reporting and no later than a time when the UE receives a MAC-CE command for a TCI activation. The period can depend on a power class supported by the UE. In an example, the period is 4s when the UE supports a power class of 1, and the period is 3s when the UE supports power classes 2/3/4. Further, during a period from the L3-RSRP reporting to the valid CQI reporting, the reported SSBs with SSB indices remain detectable according to cell identification conditions, such as an signal noise ratio (SNR) of the SSB being larger than a threshold during the SCell activation procedure, and the TCI state is selected based on one of the latest reported SSB indices. Otherwise, the SCell is unknown to the UE. In an embodiment, the requirement for the unknown SCell can apply if the activation commands for PDCCH TCI, PDSCH TCI (when applicable), a semi-persistent CSI-RS for the CQI reporting (when applicable), and a configuration message for TCI of a periodic CSI-RS for the CQI reporting (when applicable) are based on a latest valid L1-RSRP reporting.

When the SCell is known to the UE, the UE can measure the deactivated SCell based on SSB(s), such as SS/PBCH block(s). The UE can report the measurement results with beam index or indices for the deactivated SCell. A base station can determine a suitable beam pair for CSI reporting later when the base station receives the measurement reporting with the beam index (or indices). Subsequently, the base station can determine the TCI information for DL channel(s) and RSs (e.g., CSI-RS reception of the SCell) and spatial relation for uplink transmission (e.g., CSI reporting). The base station can signal the TCI information for the DL channel(s) and RSs (e.g., the CSI-RS reception) and the spatial relation for the uplink transmission to the UE. In an embodiment, the process 400 is implemented for the SCell that is known to the UE.

When the SCell is determined to be unknown to the UE, the beam management in the SCell to be activated can measure and acquire the best (e.g., largest signal powers or RSRPs) M beam pair(s) including corresponding DL Tx beam(s) and DL Rx beam(s). The beam reporting in the SCell to be activated can report best J beam pair(s) to the base station where J is a positive integer that is less than or equal to M. In an example, the best J beam pair(s) corresponds to the J beam pair(s) having the largest signal power(s) in the M beam pair(s). The base station can determine a suitable beam pair for CSI reporting when the base station receives the beam reporting. Subsequently, the base station can determine the TCI information for downlink of the SCell, such as CSI calculation and reporting. In an embodiment, the process 300 is implemented for the SCell that is unknown to the UE.

In an embodiment, a SCell (or target SCell) to be activated in a cell group is in the FR2 and no active serving cell is in the FR2. For example, a PCell or a PSCell of the cell group is in the FR1. The target SCell is configured for an electronic device (e.g., an UE). An activation time (e.g., a Tactivation_time) can be determined as follows.

If the target SCell is known to the UE and a semi-persistent CSI-RS is used for CSI reporting, then the activation time can be determined based on a fine timing (e.g., TFineTiming), a hybrid automatic repeat request (HARQ) time (e.g., T_{HARQ}), an uncertainty time (e.g., Tuncertainty), and/or the like. For example, if the UE receives an SCell activation command, a semi-persistent CSI-RS activation command, and a TCI state activation command at a same time, then Tactivation_time = T_{fineTiming} + 5 milliseconds (ms). If the UE receives the TCI state activation command after the SCell activation command, then Tactivation_time = max (3ms, Tuncertainty) + T_{HARQ} +T_{fineTiming} + 5ms.

If the target SCell is known to the UE and a periodic CSI-RS is used for the CSI reporting, then Tactivation_time is equal to a maximum of a first summation and a second summation. The first summation is equal to a sum of Tuncertainty_MAC, 5ms, and T_{fineTiming}. The second summation is equal to a sum of Tuncertainty_RRC and T_{RRC_delay}.

If the target SCell is unknown to the UE and a semi-persistent CSI-RS is used for the CSI reporting, then Tactivation_time is equal to a summation of 8ms, 24*Trs, Tuncertainty_MAC, T_{L1-RSRP}, ₘₑₐₛᵤᵣₑ + T_{L1-RSRP}, report + T_{HARQ} + T_{fineTiming}.

In an example, Trs is an SSB Based radio resource measurement (RRM) Measurement Timing Configuration (SMTC) periodicity of the SCell being activated if the UE is provided with an SMTC configuration for the SCell in SCell addition message, otherwise Trs is the SMTC configured in the measObjectNR having the same SSB frequency and a subcarrier spacing. If the UE is not provided with the SMTC configuration or measurement object on the frequency, the requirement related to Trs is applied with Trs = 5ms assuming the SSB transmission periodicity is 5ms. In an example, there is no requirements if the SSB transmission periodicity is not 5ms. Tuncertainty_MAC can be a time period between reception of TCI indication, semi-persistent CSI-RS for CQI reporting configuration to SCell activation command in known condition. In an example, Tuncertainty_MAC is the time period between reception of TCI indication, semi-persistent CSI-RS for CQI reporting configuration to L1-RSRP reporting in unknown condition. Tuncertainty_RRC can be a time period between reception of TCI indication, periodic CSI-RS for CQI reporting configuration to SCell activation command in known condition. In an example, Tuncertainty_RRC is a time period between reception of TCI indication, periodic CSI-RS for CQI reporting configuration to L1-RSRP reporting in unknown condition. T_{fineTiming} can be a time for fine timing tacking. T_{RRC_delay} can be a RRC processing time. T_{L1-RSRP}, ₘₑₐₛᵤᵣₑ can be a L1-RSRP measurement delay. TL1-RSRP,report can be a L1-RSRP reporting delay.

If the target SCell is unknown to the UE and a periodic CSI-RS is used for the CSI reporting, then Tactivation_time is a summation of 3ms, 24*Trs, TL1-RSRP, measure + TL1-RSRP, report + a first time. The first time is a maximum of a third summation and the second summation. The third summation is a sum of THARQ, Tuncertainty_MAC, 5ms, and TFineTiming.

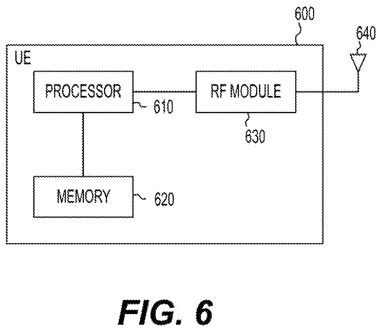

Fig. 6 shows an exemplary block diagram of an electronic device 600 (e.g., a UE 600) according to an embodiment of the disclosure. The UE 600 can be configured to implement various embodiments of the disclosure described herein. The UE 600 can include a processor (or processing circuitry) 610, memory 620, and a radio frequency (RF) module 630 that are coupled together as shown in Fig. 6. The processor 610, the memory 620, and the RF module 630 can also be coupled differently from the example shown in Fig. 6. In various examples, the UE 600 can be a mobile phone, a tablet computer, a desktop computer, a vehicle carried device, and the like.

The processor 610 can be configured to perform various functions of the electronic device 110 described above with reference to Figs. 1A, 1B, 2A, 2B, and 3-5. The processor 610 can include signal processing circuitry to process received or to be transmitted data according to communication protocols specified in, for example, LTE and NR standards. The processor 610 can execute program instructions, for example, stored in the memory 620, to perform functions related with different communication protocols. The processor 610 can be implemented with suitable hardware, software, or a combination thereof. For example, the processor 610 can be implemented with application specific integrated circuits (ASIC), field programmable gate arrays (FPGA), and the like, that includes circuitry. The circuitry can be configured to perform various functions of the processor 610.

In one example, the memory 620 can store program instructions that, when executed by the processor 610, cause the processor 610 to perform various functions as described in the disclosure. The memory 620 can include a ROM, a RAM, a flash memory, a solid state memory, a hard disk drive, and the like.

The RF module 630 can be configured to receive a digital signal from the processor 610 and accordingly transmit a signal to a base station in a wireless communication network via an antenna 640. In addition, the RF module 630 can be configured to receive a wireless signal from a base station and accordingly generate a digital signal which is provided to the processor 610. The RF module 630 can include digital to analog/analog to digital converters (DAC/ADC), frequency down/up converters, filters, and amplifiers for reception and transmission operations. For example, the RF module 630 can include converter circuits, filter circuits, amplification circuits, and the like, for processing signals on different carriers or bandwidth parts.

The UE 600 can optionally include other components, such as input and output devices, additional CPU or signal processing circuitry, and the like. Accordingly, the UE 600 may be capable of performing other additional functions, such as executing application programs, and processing alternative communication protocols.

The processes and functions described herein can be implemented as a computer program which, when executed by one or more processors, can cause the one or more processors to perform the respective processes and functions. The computer program may be stored or distributed on a suitable medium, such as an optical storage medium or a solid-state medium supplied together with, or as part of, other hardware. The computer program may also be distributed in other forms, such as via the Internet or other wired or wireless telecommunication systems. For example, the computer program can be obtained and loaded into an apparatus, including obtaining the computer program through physical medium or distributed system, including, for example, from a server connected to the Internet.

The computer program may be accessible from a computer-readable medium providing program instructions for use by or in connection with a computer or any instruction execution system. A computer readable medium may include any apparatus that stores, communicates, propagates, or transports the computer program for use by or in connection with an instruction execution system, apparatus, or device. The computer-readable medium can be magnetic, optical, electronic, electromagnetic, infrared, or semiconductor system (or apparatus or device) or a propagation medium. The computer-readable medium may include a computer-readable non-transitory storage medium such as a semiconductor or solid state memory, magnetic tape, a removable computer diskette, a RAM, a ROM, a magnetic disk and an optical disk, and the like. The computer-readable non-transitory storage medium can include all types of computer readable medium, including magnetic storage medium, optical storage medium, flash medium and solid state storage medium.

The various circuitry, circuits, components, modules, and the like in the present disclosure can be implemented using any suitable technology, such as an integrated circuit (IC), ICs, digital signal processors (DSPs), microprocessors, CPUs, field programmable gate arrays, (FPGAs), Application-specific integrated circuits (ASICs), and the like. In an example, the various circuitry, components, modules, and the like can also include one or more processing circuits executing software instructions.

The scope of protection of the invention is limited by the appended claims.

## Claims

1. A method (200A) for cell activation of a secondary cell (171(2)), SCell, configured for an electronic device (110), comprising:
determining (S210A) signal qualities of reference signals transmitted from a network (101) to the electronic device (110), the signal qualities corresponding to powers of the reference signals received from corresponding reception directions by the electronic device (110);
reporting (S220A) at least one of the signal qualities to the network (101);
receiving (S230A), from the network (101), a signal including transmission configuration indication, TCI, information indicating a selected transmission direction to be used by the electronic device (110) for downlink, DL, communication with the network (101) in the SCell (171(2)), the selected transmission direction being based on the reported at least one of the signal qualities;
determining a channel state information, CSI, report based on the TCI information or both the TCI information and spatial relation information; and
reporting the CSI report to the network (101) using the selected transmission direction.

2. The method (200A) according to claim 1, further comprising:
prior to determining the signal qualities,
receiving, from the network (101), an SCell activation command to activate the SCell (171(2)), the SCell (171(2)) being a cell to be activated first in a frequency range 2, FR2, including millimeter wave frequencies; and
synchronizing with and identifying the SCell (171(2)) based on synchronization signals from the network (101); and
after receiving the signal indicating the selected transmission direction, reporting the CSI report to the network (101) using the selected transmission direction, wherein the signal further includes spatial relation information indicating a second selected transmission direction to be used by the electronic device (110) for uplink, UL, communication with the network (101).

3. The method (200A) according to claim 2, wherein the determining the signal qualities comprises:
determining layer 1, L1, reference signal received powers, L1-RSRPs, for the reference signals, the signal qualities being the L1-RSRPs.

4. The method (200A) according to claim 3, wherein
each of the reference signals corresponds to a beam pair including a DL transmission beam used by the network (101) and a DL reception beam used by the electronic device (110), the DL reception beam having one of the reception directions that corresponds to the respective reference signal.

5. The method (200A) according to claim 1, wherein
the reference signals include at least one channel-state information reference signal, CSI-RS, and/or at least one synchronization signal block, SSB, and
reporting the at least one of the signal qualities further includes reporting at least one beam index of the at least one CSI-RS and/or the at least one SSB.

6. The method (200A) according to claim 1, further comprising:
after determining the signal qualities,
receiving, from the network (101), an SCell activation command to activate the SCell (171(2)), the SCell (171(2)) being a cell to be activated first in a FR2;
synchronizing with and identifying the SCell (171(2)) based on synchronization signals from the network (101); and
after receiving the signal indicating the selected transmission direction, reporting the CSI report to the network (101) using the selected transmission direction, wherein the signal further includes spatial relation information indicating a second selected transmission direction to be used by the electronic device (110) for uplink, UL, communication with the network (101).

7. The method (200A) according to claim 6, wherein the determining the signal qualities comprises:
determining layer 3, L3, reference signal received powers, L3-RSRPs, for the reference signals, the signal qualities being the L3-RSRPs.

8. The method (200A) according to claim 6, wherein
the reference signals include SSBs having respective SSB indices; the TCI information includes a TCI state that is determined based on the at least one of the SSB indices; and
the spatial relation information includes a spatial relation that is determined based on the at least one of the SSB indices.

9. The method (200A) according to claim 1, after activating the SCell (171(2)) in a FR2, further comprising:
receiving, from the network (101), an SCell activation command to activate a second SCell in the FR2;
acquiring second TCI information and second spatial relation information for the second SCell based on a cell activated in the FR2, the activated cell in the FR2 and the second SCell being in a same frequency band in the FR2, the second TCI information indicating a third selected transmission direction to be used by the electronic device (110) in the second SCell for DL communication with the network, and the second spatial relation information indicating a fourth selected transmission direction to be used by the electronic device (110) in the second SCell for UL communication, respectively;
synchronizing with and identifying the second SCell based on synchronization signals from the network (101);
determining a second CSI report based on the second TCI information and the spatial relation information; and
reporting the second CSI report to the network (101) using the third selected transmission direction for the second SCell.

10. A method (200B) for cell activation of a secondary cell (171(2)), SCell, configured for an electronic device (110), comprising:
wirelessly transmitting (S210B) reference signals from a base station (120) to the electronic device (110);
receiving (S220B) at least one of signal qualities from the electronic device (110), the signal qualities of the reference signals indicating powers of the reference signals received from corresponding reception directions by the electronic device (110);
determining (S230B), based on the at least one of the signal qualities, transmission configuration indication, TCI, information indicating a selected transmission direction to be used for downlink, DL, communication with the electronic device (110);
transmitting (S240B) a signal indicating the selected transmission direction to the electronic device (110); and
receiving a channel state information, CSI, report, wherein the CSI report is determined based on the TCI information or both the TCI information and spatial relation information.

11. The method (200B) according to claim 10, wherein
determining the spatial relation information that indicates a second selected transmission direction to be used for UL communication with the electronic device (110); and
transmitting the signal includes transmitting the TCI information and the spatial relation information.

12. An electronic device (110) for cell activation of a secondary cell (171(2)), SCell, configured for the electronic device (110), comprising processing circuitry (150) configured to:
determine signal qualities of reference signals transmitted from a network to the electronic device (110), the signal qualities corresponding to powers of the reference signals received from corresponding reception directions by the electronic device (110);
report at least one of the signal qualities to the network (101);
receive, from the network (101), a signal including transmission configuration indication, TCI, information indicating a selected transmission direction to be used by the electronic device (110) for downlink, DL, communication with the network (101) in the SCell (171(2)), the selected transmission direction being based on the reported at least one of the signal qualities;
determine a channel state information, CSI, report based on the TCI information or both the TCI information and spatial relation information; and
report the CSI report to the network (101) using the selected transmission direction.

13. The electronic device (110) according to claim 12, wherein the processing circuitry (150) is further configured to:
prior to determining the signal qualities,
receive, from the network (101), an SCell activation command to activate the SCell (171(2)), the SCell (171(2)) being a cell to be activated first in a frequency range 2, FR2, including millimeter wave frequencies; and
synchronize with and identify the SCell (171(2)) based on synchronization signals from the network (101); and
after receiving the signal indicating the selected transmission direction, report the CSI report to the network (101) using the selected transmission direction, wherein the signal further includes spatial relation information indicating a second selected transmission direction to be used by the electronic device (110) for uplink, UL, communication with the network (101).

14. The electronic device (110) according to claim 13, wherein the processing circuitry (150) is further configured to:
determine layer 1, L1, reference signal received powers, L1-RSRPs, for the reference signals, the signal qualities being the L1-RSRPs.

15. The electronic device (110) according to claim 14, wherein
each of the reference signals corresponds to a beam pair including a DL transmission beam used by the network (101) and a DL reception beam used by the electronic device (110), the DL reception beam having one of the reception directions that corresponds to the respective reference signal.

16. The electronic device (110) according to claim 12, wherein
the reference signals include at least one channel-state information reference signal, CSI-RS, and/or at least one synchronization signal block, SSB, and
the processing circuitry (150) is further configured to report at least one beam index of the at least one CSI-RS and/or the at least one SSB.

17. The electronic device (110) according to claim 12, wherein the processing circuitry (150) is further configured to:
after determining the signal qualities,
receive, from the network (101), an SCell activation command to activate the SCell (171(2)), the SCell (171(2)) being a first cell to be activated in a FR2;
synchronize with and identify the SCell (171(2)) based on synchronization signals from the network (101); and
after receiving the signal indicating the selected transmission direction, report the CSI report to the network (101) using the selected transmission direction, wherein the signal further includes spatial relation information indicating a second selected transmission direction to be used by the electronic device (110) for uplink, UL, communication with the network (101).

18. The electronic device (110) according to claim 17, wherein the processing circuitry (150) is further configured to:
determine layer 3, L3, reference signal received powers, L3-RSRPs, for the reference signals, the signal qualities being the L3-RSRPs.

19. The electronic device (110) according to claim 17, wherein
the reference signals include SSBs having respective SSB indices,
the TCI information includes a TCI state that is determined based on the at least one of the SSB indices, and
the spatial relation information includes a spatial relation that is determined based on the at least one of the SSB indices.

20. The electronic device (110) according to claim 12, wherein, after activating the SCell (171(2)) in a FR2, the processing circuitry (150) is configured to:
receive, from the network (101), an SCell activation command to activate a second SCell in the FR2;
acquire second TCI information and second spatial relation information for the second SCell based on a cell activated in the FR2, the activated cell in the FR2 and the second SCell being in a same frequency band in the FR2, the second TCI information indicating a third selected transmission direction to be used by the electronic device (110) in the second SCell for DL communication with the network (101), and the second spatial relation information indicating a fourth selected transmission direction to be used by the electronic device (110) in the second SCell for UL communication respectively;
synchronize with and identify the second SCell based on synchronization signals from the network (101);
determine a second CSI report based on the second TCI information and the spatial relation information; and
report the second CSI report to the network (101) using the third selected transmission direction for the second SCell.

## Patentansprüche

1. Ein Verfahren (200A) zur Zellaktivierung einer Sekundärzelle (171(2)), SCell, die für eine elektronische Vorrichtung (110) konfiguriert ist, umfassend:
Bestimmen (S210A) von Signalqualitäten von Referenzsignalen, die von einem Netzwerk (101) an die elektronische Vorrichtung (110) übertragen werden, wobei die Signalqualitäten den Leistungen der Referenzsignale entsprechen, die die elektronische Vorrichtung (110) aus entsprechenden Empfangsrichtungen empfängt;
Melden (S220A) mindestens einer der Signalqualitäten an das Netzwerk (101);
Empfangen (S230A) eines Signals von dem Netzwerk (101), das Übertragungskonfigurationsanzeige-, TCI-, Informationen enthält, die eine ausgewählte Übertragungsrichtung angeben, die von der elektronischen Vorrichtung (110) für die Downlink-, DL-, Kommunikation mit dem Netzwerk (101) in der SCell (171(2)) verwendet werden soll, wobei die ausgewählte Übertragungsrichtung auf mindestens einer der gemeldeten Signalqualitäten basiert;
Bestimmen eines Kanalzustandsinformations-, CSI-, Berichts auf der Grundlage der TCI-Informationen oder sowohl der TCI-Informationen als auch der räumlichen Beziehungsinformationen; und
und Melden des CSI-Berichts an das Netzwerk (101) unter Verwendung der ausgewählten Übertragungsrichtung.

2. Das Verfahren (200A) gemäß Anspruch 1, das weiterhin umfasst:
vor dem Bestimmen der Signalqualitäten,
Empfangen eines SCell-Aktivierungsbefehls von dem Netzwerk (101) zum Aktivieren der SCell (171(2)), wobei die SCell (171(2)) eine Zelle ist, die zuerst in einem Frequenzbereich 2, FR2, einschließlich Millimeterwellenfrequenzen, aktiviert werden soll; und
Synchronisieren mit und Identifizieren der SCell (171(2)) basierend auf Synchronisationssignalen von dem Netzwerk (101); und
nach dem Empfangen des Signals, das die ausgewählte Übertragungsrichtung anzeigt, Melden des CSI-Berichts an das Netzwerk (101) unter Verwendung der ausgewählten Übertragungsrichtung, wobei das Signal außerdem räumliche Beziehungsinformationen enthält, die eine zweite ausgewählte Übertragungsrichtung angeben, die von der elektronischen Vorrichtung (110) für die Uplink-, UL-, Kommunikation mit dem Netzwerk (101) verwendet werden soll.

3. Das Verfahren (200A) gemäß Anspruch 2, wobei das Bestimmen der Signalqualitäten umfasst:
Bestimmen der empfangenen Referenzsignalleistungen, L1-RSRPs, der Schicht 1, L1, für die Referenzsignale, wobei die Signalqualitäten die L1-RSRPs sind.

4. Das Verfahren (200A) gemäß Anspruch 3, wobei
jedes der Referenzsignale einem Strahlenpaar entspricht, das einen von dem Netzwerk (101) verwendeten DL-Sendestrahl und einen von der elektronischen Vorrichtung (110) verwendeten DL-Empfangsstrahl umfasst, wobei der DL-Empfangsstrahl eine der Empfangsrichtungen aufweist, die dem jeweiligen Referenzsignal entspricht.

5. Das Verfahren (200A) gemäß Anspruch 1, wobei
die Referenzsignale mindestens ein Kanalzustandsinformations-Referenzsignal, CSI-RS, und/oder mindestens einen Synchronisationssignalblock, SSB, umfassen, und
das Melden der mindestens einen Signalqualität ferner das Melden mindestens eines Strahlindex des mindestens einen CSI-RS und/oder des mindestens einen SSB umfasst.

6. Das Verfahren (200A) gemäß Anspruch 1, das weiterhin umfasst:
nach dem Bestimmen der Signalqualitäten,
Empfangen eines SCell-Aktivierungsbefehls von dem Netzwerk (101) zum Aktivieren der SCell (171(2)), wobei die SCell (171(2)) eine Zelle ist, die in einem FR2 zuerst aktiviert werden soll;
Synchronisieren mit und Identifizieren der SCell (171(2)) basierend auf Synchronisationssignalen von dem Netzwerk (101); und
nach dem Empfangen des Signals, das die ausgewählte Übertragungsrichtung anzeigt, Melden des CSI-Berichts an das Netzwerk (101) unter Verwendung der ausgewählten Übertragungsrichtung, wobei das Signal außerdem räumliche Beziehungsinformationen enthält, die eine zweite ausgewählte Übertragungsrichtung angeben, die von der elektronischen Vorrichtung (110) für die Uplink-, UL-, Kommunikation mit dem Netzwerk (101) verwendet werden soll.

7. Das Verfahren (200A) gemäß Anspruch 6, wobei das Bestimmen der Signalqualitäten umfasst:
Bestimmen der empfangenen Referenzsignalleistungen, L3-RSRPs, der Schicht 3, L3, für die Referenzsignale, wobei die Signalqualitäten die L3-RSRPs sind.

8. Das Verfahren (200A) gemäß Anspruch 6, wobei
die Referenzsignale SSBs mit jeweiligen SSB-Indizes umfassen; die TCI-Informationen einen TCI-Zustand umfassen, der basierend auf mindestens einem der SSB-Indizes bestimmt wird; und
die räumlichen Beziehungsinformationen eine räumliche Beziehung umfassen, die basierend auf mindestens einem der SSB-Indizes bestimmt wird.

9. Das Verfahren (200A) gemäß Anspruch 1, nach dem Aktivieren der SCell (171(2)) in einem FR2, weiterhin umfassend:
Empfangen eines SCell-Aktivierungsbefehls von dem Netzwerk (101), um eine zweite SCell in dem FR2 zu aktivieren;
Erfassen zweiter TCI-Informationen und zweiter räumlichen Beziehungsinformationen für die zweite SCell basierend auf einer in dem FR2 aktivierten Zelle, wobei sich die aktivierte Zelle in dem FR2 und die zweite SCell im selben Frequenzband in dem FR2 befinden, wobei die zweiten TCI-Informationen eine dritte ausgewählte Übertragungsrichtung angeben, die von der elektronischen Vorrichtung (110) in der zweiten SCell für die DL-Kommunikation mit dem Netzwerk verwendet werden soll, und die zweiten räumlichen Beziehungsinformationen eine vierte ausgewählte Übertragungsrichtung angeben, die von der elektronischen Vorrichtung (110) in der zweiten SCell für die UL-Kommunikation verwendet werden soll;
Synchronisieren mit und Identifizieren der zweiten SCell basierend auf Synchronisierungssignalen von dem Netzwerk (101);
Bestimmen eines zweiten CSI-Berichts basierend auf den zweiten TCI-Informationen und den räumlichen Beziehungsinformationen; und
Melden des zweiten CSI-Berichts an das Netzwerk (101) unter Verwendung der dritten ausgewählten Übertragungsrichtung für die zweite SCell.

10. Ein Verfahren (200B) zur Zellaktivierung einer Sekundärzelle (171(2)), SCell, die für eine elektronische Vorrichtung (110) konfiguriert ist, umfassend:
drahtloses Übertragen (S210B) von Referenzsignalen von einer Basisstation (120) an die elektronische Vorrichtung (110);
Empfangen (S220B) mindestens einer der Signalqualitäten von der elektronischen Vorrichtung (110), wobei die Signalqualitäten der Referenzsignale Leistungen der Referenzsignale angeben, die von der elektronischen Vorrichtung (110) aus entsprechenden Empfangsrichtungen empfangen wurden;
Bestimmen (S230B), basierend auf mindestens einer der Signalqualitäten, der Übertragungskonfigurationsanzeige-, TCI-, Informationen, die eine ausgewählte Übertragungsrichtung angeben, die für die Downlink-, DL-, Kommunikation mit der elektronischen Vorrichtung (110) verwendet werden soll;
Senden (S240B) eines Signals, das die ausgewählte Übertragungsrichtung angibt, an die elektronische Vorrichtung (110); und
Empfangen eines Kanalzustandsinformations-, CSI-, Berichts, wobei der CSI-Bericht auf der Grundlage der TCI-Informationen oder sowohl der TCI-Informationen als auch der räumlichen Beziehungsinformationen bestimmt wird.

11. Das Verfahren (200B) gemäß Anspruch 10, wobei
Bestimmen der räumlichen Beziehungsinformationen, die eine zweite ausgewählte Übertragungsrichtung angeben, die für die UL-Kommunikation mit der elektronischen Vorrichtung (110) verwendet werden soll; und
Übertragen des Signals Übertragen der TCI-Informationen und der räumlichen Beziehungsinformationen umfasst.

12. Eine elektronische Vorrichtung (110) zur Zellaktivierung einer Sekundärzelle (171(2)), SCell, die für die elektronische Vorrichtung (110) konfiguriert ist, umfassend eine Verarbeitungsschaltung (150), die ausgebildet ist:
Signalqualitäten von Referenzsignalen zu bestimmen, die von einem Netzwerk an die elektronische Vorrichtung (110) übertragen werden, wobei die Signalqualitäten den Leistungen der Referenzsignale entsprechen, die die elektronische Vorrichtung (110) aus entsprechenden Empfangsrichtungen empfängt;
mindestens eine der Signalqualitäten an das Netzwerk (101) zu melden;
ein Signal von dem Netzwerk (101) zu empfangen, das eine Übertragungskonfigurationsanzeige-, TCI-, Informationen enthält, die eine ausgewählte Übertragungsrichtung angeben, die von der elektronischen Vorrichtung (110) für die Downlink-, DL-, Kommunikation mit dem Netzwerk (101) in der SCell (171(2)) verwendet werden soll, wobei die ausgewählte Übertragungsrichtung auf mindestens einer der gemeldeten Signalqualitäten basiert;
einen Kanalzustandsinformations-, CSI-, Bericht auf der Grundlage der TCI-Informationen oder sowohl der TCI-Informationen als auch der räumlichen Beziehungsinformationen zu bestimmen; und
den CSI-Bericht unter Verwendung der ausgewählten Übertragungsrichtung an das Netzwerk (101) zu melden.

13. Die elektronische Vorrichtung (110) gemäß Anspruch 12, wobei die Verarbeitungsschaltung (150) ferner ausgebildet ist:
vor dem Bestimmen der Signalqualitäten,
einen SCell-Aktivierungsbefehl von dem Netzwerk (101) zum Aktivieren der SCell (171(2)) zu empfangen, wobei die SCell (171(2)) eine Zelle ist, die zuerst in einem Frequenzbereich 2, FR2, einschließlich Millimeterwellenfrequenzen, aktiviert werden soll; und
mit der SCell (171(2)) zu synchronisieren und die SCell (171(2)) zu identifizieren, auf der Grundlage von Synchronisationssignalen von dem Netzwerk (101); und
nach dem Empfangen des Signals, das die ausgewählte Übertragungsrichtung anzeigt, den CSI-Bericht unter Verwendung der ausgewählten Übertragungsrichtung an das Netzwerk (101) zu melden, wobei das Signal außerdem räumliche Beziehungsinformationen enthält, die eine zweite ausgewählte Übertragungsrichtung angeben, die von der elektronischen Vorrichtung (110) für die Uplink-, UL-, Kommunikation mit dem Netzwerk (101) verwendet werden soll.

14. Die elektronische Vorrichtung (110) gemäß Anspruch 13, wobei die Verarbeitungsschaltung (150) ferner ausgebildet ist:
die empfangenen Referenzsignalleistungen, L1-RSRPs, der Schicht 1, L1, für die Referenzsignale zu bestimmen, wobei die Signalqualitäten die L1-RSRPs sind.

15. Die elektronische Vorrichtung (110) nach Anspruch 14, wobei
jedes der Referenzsignale einem Strahlenpaar entspricht, das einen von dem Netzwerk (101) verwendeten DL-Sendestrahl und einen von der elektronischen Vorrichtung (110) verwendeten DL-Empfangsstrahl umfasst, wobei der DL-Empfangsstrahl eine der Empfangsrichtungen aufweist, die dem jeweiligen Referenzsignal entspricht.

16. Die elektronische Vorrichtung (110) nach Anspruch 12, wobei
die Referenzsignale mindestens ein Kanalzustandsinformations-Referenzsignal, CSI-RS, und/oder mindestens einen Synchronisationssignalblock, SSB, umfassen, und
die Verarbeitungsschaltung (150) ferner dazu ausgebildet ist, mindestens einen Strahlindex von dem mindestens einen CSI-RS und/oder dem mindestens einen SSB zu melden.

17. Die elektronische Vorrichtung (110) gemäß Anspruch 12, wobei die Verarbeitungsschaltung (150) ferner ausgebildet ist:
nach Bestimmen der Signalqualitäten,
einen SCell-Aktivierungsbefehl zum Aktivieren der SCell (171(2)) von dem Netzwerk (101) zu empfangen, wobei die SCell (171(2)) eine erste Zelle ist, die in einem FR2 aktiviert werden soll;
mit der SCell (171(2)) zu synchronisieren und die SCell (171(2)) zu identifizieren, auf der Grundlage von Synchronisationssignalen von dem Netzwerk (101); und
nach dem Empfangen des Signals, das die ausgewählte Übertragungsrichtung anzeigt, den CSI-Bericht unter Verwendung der ausgewählten Übertragungsrichtung an das Netzwerk (101) zu melden, wobei das Signal außerdem räumliche Beziehungsinformationen enthält, die eine zweite ausgewählte Übertragungsrichtung angeben, die von der elektronischen Vorrichtung (110) für die Uplink-, UL-, Kommunikation mit dem Netzwerk (101) verwendet werden soll.

18. Die elektronische Vorrichtung (110) gemäß Anspruch 17, wobei die Verarbeitungsschaltung (150) ferner ausgebildet ist:
die empfangenen Referenzsignalleistungen, L3-RSRPs, der Schicht 3, L3, für die Referenzsignale zu bestimmen, wobei die Signalqualitäten die L3-RSRPs sind.

19. Die elektronische Vorrichtung (110) nach Anspruch 17, wobei
die Referenzsignale SSBs mit entsprechenden SSB-Indizes umfassen,
die TCI-Informationen einen TCI-Zustand umfassen, der basierend auf mindestens einem der SSB-Indizes bestimmt wird, und
die räumlichen Beziehungsinformationen eine räumliche Beziehung umfassen, die basierend auf mindestens einem der SSB-Indizes bestimmt wird.

20. Die elektronische Vorrichtung (110) gemäß Anspruch 12, wobei die Verarbeitungsschaltung (150) nach der Aktivierung der SCell (171(2)) in einem FR2 dazu ausgebildet ist:
einen SCell-Aktivierungsbefehl von dem Netzwerk (101) zu empfangen, um eine zweite SCell in dem FR2 zu aktivieren;
zweite TCI-Informationen und zweite räumliche Beziehungsinformationen für die zweite SCell basierend auf einer in dem FR2 aktivierten Zelle zu erfassen, wobei sich die aktivierte Zelle in dem FR2 und die zweite SCell in einem selben Frequenzband in FR2 befinden, wobei die zweiten TCI-Informationen eine dritte ausgewählte Übertragungsrichtung angeben, die von der elektronischen Vorrichtung (110) in der zweiten SCell für die DL-Kommunikation mit dem Netzwerk (101) verwendet werden soll, und die zweiten räumlichen Beziehungsinformationen eine vierte ausgewählte Übertragungsrichtung angeben, die von der elektronischen Vorrichtung (110) in der zweiten SCell für die UL-Kommunikation verwendet werden soll;
mit der zweiten SCell zu synchronisieren und die zweite SCell zu identifizieren, basierend auf Synchronisierungssignalen von dem Netzwerk (101);
einen zweiten CSI-Bericht basierend auf den zweiten TCI-Informationen und den räumlichen Beziehungsinformationen zu bestimmen; und
den zweiten CSI-Bericht unter Verwendung der dritten ausgewählten Übertragungsrichtung für die zweite SCell an das Netzwerk (101) zu melden.

## Revendications

1. Procédé (200A) d'activation cellulaire d'une cellule secondaire (171(2)), SCell, configurée pour un dispositif électronique (110), comprenant :
déterminer (S210A) les qualités de signal des signaux de référence transmis depuis un réseau (101) vers le dispositif électronique (110), les qualités de signal correspondant aux puissances des signaux de référence reçus depuis les directions de réception correspondantes par le dispositif électronique (110) ;
signaler (S220A) au moins une des qualités du signal au réseau (101) ;
recevoir (S230A), en provenance du réseau (101), un signal comprenant une indication de configuration de transmission, TCI, des informations indiquant une direction de transmission sélectionnée à utiliser par le dispositif électronique (110) pour la communication en liaison descendante, DL, avec le réseau (101) dans la SCell (171(2)), la direction de transmission sélectionnée étant basée sur au moins une des qualités de signal signalées ;
déterminer un rapport d'informations sur l'état du canal, CSI, basé sur les informations TCI ou à la fois sur les informations TCI et les informations de relation spatiale ; et
signaler le rapport CSI au réseau (101) en utilisant la direction de transmission sélectionnée.

2. Procédé (200A) selon la revendication 1, comprenant en outre :
avant de déterminer les qualités du signal,
recevoir, du réseau (101), une commande d'activation de SCell pour activer la SCell (171(2)), la SCell (171(2)) étant une cellule à activer en premier dans une plage de fréquences 2, FR2, incluant les fréquences des ondes millimétriques ; et
synchroniser et identifier la SCell (171(2)) en fonction des signaux de synchronisation provenant du réseau (101) ; et
après avoir reçu le signal indiquant la direction de transmission sélectionnée, rapporter le rapport CSI au réseau (101) en utilisant la direction de transmission sélectionnée, le signal comprenant en outre des informations de relation spatiale indiquant une seconde direction de transmission sélectionnée à utiliser par le dispositif électronique (110) pour la communication de liaison montante, UL, avec le réseau (101).

3. Procédé (200A) selon la revendication 2, dans lequel la détermination des qualités du signal comprend :
détermination des puissances reçues des signaux de référence de couche 1, L1, L1-RSRP, pour les signaux de référence, les qualités des signaux étant les L1-RSRP.

4. Procédé (200A) selon la revendication 3, dans lequel
chacun des signaux de référence correspond à une paire de faisceaux comprenant un faisceau d'émission DL utilisé par le réseau (101) et un faisceau de réception DL utilisé par le dispositif électronique (110), le faisceau de réception DL ayant une des directions de réception qui correspond au signal de référence respectif.

5. Procédé (200A) selon la revendication 1, dans lequel
les signaux de référence comprennent au moins un signal de référence d'informations d'état de canal, CSI-RS, et/ou au moins un bloc de signaux de synchronisation, SSB, et
le rapport d'au moins une des qualités de signal comprend en outre le rapport d'au moins un indice de faisceau du ou des CSI-RS et/ou du ou des SSB.

6. Procédé (200A) selon la revendication 1, comprenant en outre :
après avoir déterminé les qualités du signal,
recevoir, du réseau (101), une commande d'activation de SCell pour activer la SCell (171(2)), la SCell (171(2)) étant une cellule à activer en premier dans un FR2 ;
synchroniser et identifier la SCell (171(2)) en fonction des signaux de synchronisation provenant du réseau (101) ; et
après avoir reçu le signal indiquant la direction de transmission sélectionnée, rapporter le rapport CSI au réseau (101) en utilisant la direction de transmission sélectionnée, le signal comprenant en outre des informations de relation spatiale indiquant une seconde direction de transmission sélectionnée à utiliser par le dispositif électronique (110) pour la communication de liaison montante, UL, avec le réseau (101).

7. Procédé (200A) selon la revendication 6, dans lequel la détermination des qualités du signal comprend :
détermination des puissances reçues des signaux de référence de couche 3, L3, L3-RSRP, pour les signaux de référence, les qualités des signaux étant les L3-RSRP.

8. Procédé (200A) selon la revendication 6, dans lequel
les signaux de référence comprennent des SSB ayant des indices SSB respectifs ; les informations TCI comprennent un état TCI qui est déterminé sur la base d'au moins un des indices SSB ; et
les informations de relation spatiale comprennent une relation spatiale qui est déterminée sur la base d'au moins un des indices SSB.

9. Procédé (200A) selon la revendication 1, après activation de la SCell (171(2)) dans un FR2, comprenant en outre :
recevoir, du réseau (101), une commande d'activation de SCell pour activer une seconde SCell dans le FR2;
acquérir des secondes informations TCI et des secondes informations de relation spatiale pour la seconde SCell sur la base d'une cellule activée dans le FR2, la cellule activée dans le FR2 et la seconde SCell étant dans une même bande de fréquence dans le FR2, les secondes informations TCI indiquant une troisième direction de transmission sélectionnée à utiliser par le dispositif électronique (110) dans la seconde SCell pour la communication DL avec le réseau, et les secondes informations de relation spatiale indiquant une quatrième direction de transmission sélectionnée à utiliser par le dispositif électronique (110) dans la seconde SCell pour la communication UL, respectivement ;
synchroniser et identifier la deuxième SCell en fonction des signaux de synchronisation provenant du réseau (101) ;
déterminer un deuxième rapport CSI sur la base des deuxièmes informations TCI et des informations de relation spatiale ; et
signaler le deuxième rapport CSI au réseau (101) en utilisant la troisième direction de transmission sélectionnée pour la deuxième SCell.

10. Procédé (200B) d'activation cellulaire d'une cellule secondaire (171(2)), SCell, configurée pour un dispositif électronique (110), comprenant :
transmettre sans fil (S210B) des signaux de référence d'une station de base (120) au dispositif électronique (110) ;
recevoir (S220B) au moins une des qualités de signal provenant du dispositif électronique (110), les qualités de signal des signaux de référence indiquant les puissances des signaux de référence reçus à partir des directions de réception correspondantes par le dispositif électronique (110) ;
déterminer (S230B), sur la base d'au moins une des qualités de signal, l'indication de configuration de transmission, TCI, des informations indiquant une direction de transmission sélectionnée à utiliser pour la communication descendante, DL, avec le dispositif électronique (110) ;
transmettre (S240B) un signal indiquant la direction de transmission sélectionnée au dispositif électronique (110) ; et
recevoir un rapport d'informations d'état de canal, CSI, dans lequel le rapport CSI est déterminé sur la base des informations TCI ou à la fois des informations TCI et des informations de relation spatiale.

11. Procédé (200B) selon la revendication 10, dans lequel
déterminer les informations de relation spatiale qui indiquent une seconde direction de transmission sélectionnée à utiliser pour la communication UL avec le dispositif électronique (110) ; et
la transmission du signal comprend la transmission des informations TCI et des informations de relation spatiale.

12. Dispositif électronique (110) pour l'activation cellulaire d'une cellule secondaire (171(2)), SCell, configuré pour le dispositif électronique (110), comprenant un circuit de traitement (150) configuré pour :
déterminer les qualités de signal des signaux de référence transmis d'un réseau au dispositif électronique (110), les qualités de signal correspondant aux puissances des signaux de référence reçus des directions de réception correspondantes par le dispositif électronique (110) ;
signaler au moins une des qualités du signal au réseau (101) ;
recevoir, du réseau (101), un signal comprenant une indication de configuration de transmission, TCI, des informations indiquant une direction de transmission sélectionnée à utiliser par le dispositif électronique (110) pour la communication en liaison descendante, DL, avec le réseau (101) dans la SCell (171(2)), la direction de transmission sélectionnée étant basée sur au moins une des qualités de signal signalées ;
déterminer un rapport d'informations sur l'état du canal, CSI, basé sur les informations TCI ou à la fois sur les informations TCI et les informations de relation spatiale ; et
signaler le rapport CSI au réseau (101) en utilisant la direction de transmission sélectionnée.

13. Dispositif électronique (110) selon la revendication 12, dans lequel le circuit de traitement (150) est en outre configuré pour :
avant de déterminer les qualités du signal,
recevoir, du réseau (101), une commande d'activation de SCell pour activer la SCell (171(2)), la SCell (171(2)) étant une cellule à activer en premier dans une plage de fréquences 2, FR2, incluant les fréquences des ondes millimétriques ; et
synchroniser et identifier la SCell (171(2)) en fonction des signaux de synchronisation provenant du réseau (101) ; et
après avoir reçu le signal indiquant la direction de transmission sélectionnée, signaler le rapport CSI au réseau (101) en utilisant la direction de transmission sélectionnée, le signal comprenant en outre des informations de relation spatiale indiquant une seconde direction de transmission sélectionnée à utiliser par le dispositif électronique (110) pour la communication de liaison montante, UL, avec le réseau (101).

14. Dispositif électronique (110) selon la revendication 13, dans lequel le circuit de traitement (150) est en outre configuré pour :
déterminer les puissances reçues du signal de référence de couche 1, L1, L1-RSRP, pour les signaux de référence, les qualités du signal étant les L1-RSRP.

15. Dispositif électronique (110) selon la revendication 14, dans lequel
chacun des signaux de référence correspond à une paire de faisceaux comprenant un faisceau d'émission DL utilisé par le réseau (101) et un faisceau de réception DL utilisé par le dispositif électronique (110), le faisceau de réception DL ayant une des directions de réception qui correspond au signal de référence respectif.

16. Dispositif électronique (110) selon la revendication 12, dans lequel
les signaux de référence comprennent au moins un signal de référence d'informations d'état de canal, CSI-RS, et/ou au moins un bloc de signaux de synchronisation, SSB, et
le circuit de traitement (150) est en outre configuré pour signaler au moins un indice de faisceau du ou des CSI-RS et/ou du ou des SSB.

17. Dispositif électronique (110) selon la revendication 12, dans lequel le circuit de traitement (150) est en outre configuré pour :
après avoir déterminé les qualités du signal,
recevoir, du réseau (101), une commande d'activation de SCell pour activer la SCell (171(2)), la SCell (171(2)) étant une première cellule à activer dans un FR2 ;
synchroniser et identifier la SCell (171(2)) en fonction des signaux de synchronisation provenant du réseau (101) ; et
après avoir reçu le signal indiquant la direction de transmission sélectionnée, signaler le rapport CSI au réseau (101) en utilisant la direction de transmission sélectionnée, le signal comprenant en outre des informations de relation spatiale indiquant une seconde direction de transmission sélectionnée à utiliser par le dispositif électronique (110) pour la communication de liaison montante, UL, avec le réseau (101).

18. Dispositif électronique (110) selon la revendication 17, dans lequel le circuit de traitement (150) est en outre configuré pour :
déterminer les puissances reçues du signal de référence de couche 3, L3, L3-RSRP, pour les signaux de référence, les qualités du signal étant les L3-RSRP.

19. Dispositif électronique (110) selon la revendication 17, dans lequel
les signaux de référence comprennent des SSB ayant des indices SSB respectifs,
les informations TCI comprennent un état TCI qui est déterminé en fonction d'au moins un des indices SSB, et
les informations de relation spatiale comprennent une relation spatiale qui est déterminée sur la base d'au moins un des indices SSB.

20. Dispositif électronique (110) selon la revendication 12, dans lequel, après activation de la SCell (171(2)) dans un FR2, le circuit de traitement (150) est configuré pour :
recevoir, du réseau (101), une commande d'activation de SCell pour activer une deuxième SCell dans le FR2 ;
acquérir des secondes informations TCI et des secondes informations de relation spatiale pour la seconde SCell sur la base d'une cellule activée dans le FR2, la cellule activée dans le FR2 et la seconde SCell étant dans une même bande de fréquence dans le FR2, les secondes informations TCI indiquant une troisième direction de transmission sélectionnée à utiliser par le dispositif électronique (110) dans la seconde SCell pour la communication DL avec le réseau (101), et les secondes informations de relation spatiale indiquant une quatrième direction de transmission sélectionnée à utiliser par le dispositif électronique (110) dans la seconde SCell pour la communication UL respectivement ;
synchroniser et identifier la deuxième SCell en fonction des signaux de synchronisation provenant du réseau (101) ;
déterminer un deuxième rapport CSI basé sur les deuxièmes informations TCI et les informations de relation spatiale ; et
signaler le deuxième rapport CSI au réseau (101) en utilisant la troisième direction de transmission sélectionnée pour la deuxième SCell.
